(19) Europäisches Patentamt
European Patent Office
Office européen des brevets

(11) EP 4 760 451 A1

(12) EUROPEAN PATENT APPLICATION
published in accordance with Art. 153(4) EPC

(43) Date of publication:
17.06.2026 Bulletin 2026/25

(51) International Patent Classification (IPC):
*G06F 1/16* (2006.01)       *H04R 1/34* (2006.01)
*H04R 3/12* (2006.01)

(21) Application number: 25731410.4

(22) Date of filing: 20.06.2025

(52) Cooperative Patent Classification (CPC):
G06F 1/16; H04R 1/34; H04R 3/12

(86) International application number:
PCT/KR2025/008628

(87) International publication number:
WO 2026/071393 (02.04.2026 Gazette 2026/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.09.2024 KR 20240130314
01.11.2024 KR 20240153864

(71) Applicant: Samsung Electronics Co., Ltd
Suwon-si, Gyeonggi-do 16677 (KR)

(72) Inventors:
• JANG, Gyudae
Suwon-si, Gyeonggi-do 16677 (KR)
• KIM, Sunglak
Suwon-si, Gyeonggi-do 16677 (KR)
• KIM, Hyunmuk
Suwon-si, Gyeonggi-do 16677 (KR)
• RYU, Jooyeol
Suwon-si, Gyeonggi-do 16677 (KR)
• CHOI, Junyoung
Suwon-si, Gyeonggi-do 16677 (KR)
• CHOI, Jinwook
Suwon-si, Gyeonggi-do 16677 (KR)
• YOON, Byounguk
Suwon-si, Gyeonggi-do 16677 (KR)

(74) Representative: Walaski, Jan Filip et al
Venner Shipley LLP
TIDE Bankside
8 Emerson Street
London SE1 9DU (GB)

(54) **FOLDABLE ELECTRONIC APPARATUS COMPRISING SPEAKER**

(57) A foldable electronic device includes a foldable housing including a first housing part, a second housing part, and a third housing part, a flexible display, and a front deco including a through hole. The third housing part includes a speaker and an audio duct. The speaker is configured to, in an unfolded state of the foldable electronic device, provide audio signals, via a first path formed by the audio duct and the through hole, toward a front side of the foldable electronic device, and in a folded state of the foldable electronic device, provide the audio signals, via a first path and a second path formed by a gap between the front deco and a rear surface of the first housing part, toward a lateral side of the foldable electronic device.

FIG. 9

## Description

### [Technical Field]

The present disclosure relates to a foldable electronic device including a speaker.

### [Background Art]

A foldable electronic device may include housing parts and a flexible display rotatably coupled with each other. A portion of the flexible display may be bent according to rotation of the housing parts. The foldable electronic device may include speakers configured to output audio signals. The speakers may be disposed inside a foldable housing.

The above-described information may be provided as a related art for the purpose of helping understanding of the present disclosure. No claim or determination is raised as to whether any of the above-described descriptions may be applied as the prior art related to the present disclosure.

### [Disclosure]

### [Technical Solution]

A foldable electronic device is provided. The foldable electronic device may comprise a foldable housing including a first housing part, a second housing part, and a third housing part. The foldable electronic device may comprise a first hinge assembly rotatably connecting the first housing part and the second housing part. The foldable electronic device may comprise a second hinge assembly rotatably connecting the second housing part and the third housing part. The first hinge assembly and the second hinge assembly may be configured to provide a folded state of the foldable electronic device having a front side of the third housing part facing a rear side of the first housing part. The foldable electronic device may comprise a flexible display including a first portion corresponding to the first housing part, a second portion corresponding to the second housing part, and a third portion corresponding to the third housing part. The third portion may define a portion of the front side of the third housing part. The foldable electronic device may comprise a front deco, including a through hole, partially covering a peripheral portion of the third portion of the flexible display, and defining another portion of the front side of the third housing part. The third housing part may include a speaker, and an audio duct, arranged with respect to the speaker, aligned with the through hole of the front deco. The rear side of the first housing part may include a portion spaced apart from the through hole of the front deco to define a gap between the rear side of the first housing part and the front deco, in the folded state of the foldable electronic device. The speaker may be configured to, in an unfolded state of the foldable electronic device, provide audio signals, via a first path formed by the audio duct and the through hole of the front deco, toward a front side of the foldable electronic device. The speaker may be configured to, in the folded state of the foldable electronic device, provide the audio signals, via the first path and a second path formed by the gap between the front deco and the rear side of the first housing part, toward a lateral side of the foldable electronic device.

A foldable electronic device is provided. The foldable electronic device may comprise a first housing part, a second housing part rotatably coupled to the first housing part, and a third housing part rotatably coupled to the second housing part. The foldable housing may have a folded state of the foldable electronic device having a front side of the third housing part facing a rear side of the first housing part. The foldable electronic device may comprise a flexible display including a first portion corresponding to the first housing part, a second portion corresponding to the second housing part, and a third portion corresponding to the third housing part. The third portion may define a portion of the front side of the third housing part. The foldable electronic device may comprise a front deco partially covering a peripheral portion of the flexible display. The front deco may include a first front deco, including a through hole, partially covering a peripheral portion of the first portion of the flexible display, a second front deco partially covering a peripheral portion of the second portion of the flexible display, and a third front deco, including a through hole, partially covering a peripheral portion of the third portion of the flexible display. The third housing part may include a first speaker, and a first audio duct, arranged with respect to the first speaker, aligned with the through hole of the third front deco. The first housing part may include a second speaker, and a second audio duct, arranged with respect to the second speaker, aligned with the through hole of the first front deco. The first speaker may be configured to, in an unfolded state of the foldable electronic device, provide audio signals, via a first path formed by the first audio duct and the through hole of the third front deco, toward a front side of the foldable electronic device. The first speaker may be configured to, in the folded state of the foldable electronic, provide the audio signals, via the first path and a second path formed by a gap between the third front deco and the rear side of the first housing part, toward a lateral side of the foldable electronic device.

**[Description of the Drawings]**

FIG. 1 is a block diagram of an electronic device in a network environment according to various embodiments.
FIG. 2A illustrates an example of a first state of an electronic device.
FIG. 2B illustrates an example of a second state of the electronic device.
FIG. 2C illustrates an example of a third state of the electronic device.
FIG. 3A is a top plan view of an electronic device from which a flexible display is removed.
FIG. 3B is a rear view of an electronic device from which a rear cover and a display are removed.
FIG. 4 illustrates a front deco and a flexible display of a foldable electronic device according to an embodiment.
FIG. 5 is a top plan view of a foldable electronic device in an unfolded state.
FIG. 6 is a top plan view of a foldable electronic device in a folded state.
FIG. 7 is a cross-sectional view of a foldable electronic device cut along line A-A' of FIG. 5.
FIG. 8 is a cross-sectional view of a foldable electronic device cut along line B-B' of FIG. 5.
FIG. 9 is a cross-sectional view of a foldable electronic device cut along line C-C' of FIG. 6.
FIG. 10 is a front perspective view with respect to a portion of a first housing part of a foldable electronic device.
FIG. 11 is a rear perspective view with respect to a portion of a first housing part of a foldable electronic device.
FIG. 12 is an exploded perspective view of the first housing part of FIG. 10.
FIG. 13 illustrates an intermediate state of a foldable electronic device.
FIG. 14 is a cross-sectional view of a foldable electronic device cut along line D-D' of FIG. 13.
FIG. 15 is a cross-sectional view of a foldable electronic device cut along line C-C' of FIG. 6.
FIG. 16 illustrates a third front deco of a foldable electronic device.
FIG. 17 illustrates a first front deco of a foldable electronic device.
FIG. 18 illustrates a second front deco of a foldable electronic device.
FIG. 19 is a cross-sectional view of a foldable electronic device cut along line C-C' of FIG. 6.
FIG. 20 illustrates a third front deco of a foldable electronic device.
FIG. 21 illustrates a first front deco of a foldable electronic device.
FIG. 22 illustrates a second front deco of a foldable electronic device.
FIG. 23 illustrates a speaker of a foldable electronic device.
FIG. 24 is a cross-sectional view of a speaker cut along line E-E' of FIG. 23.
FIG. 25 illustrates an audio duct associated with a speaker including an enclosure.
FIG. 26 illustrates an audio duct associated with a speaker that does not include an enclosure.
FIG. 27 is a block diagram of a foldable electronic device.
FIG. 28 is a flowchart illustrating an operation in which a foldable electronic device controls a quality of audio signals outputted from a speaker based on a state of the foldable electronic device.
FIG. 29 illustrates a foldable electronic device.

**[Mode for Invention]**

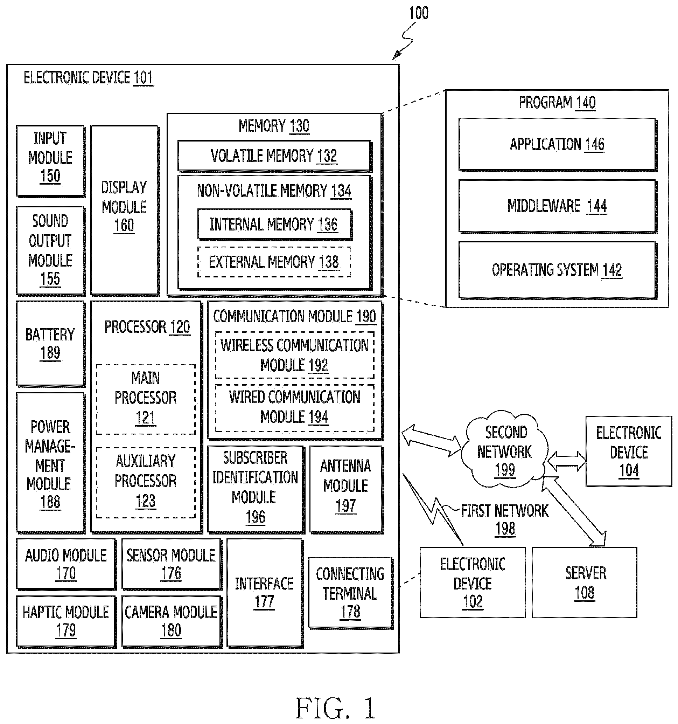

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

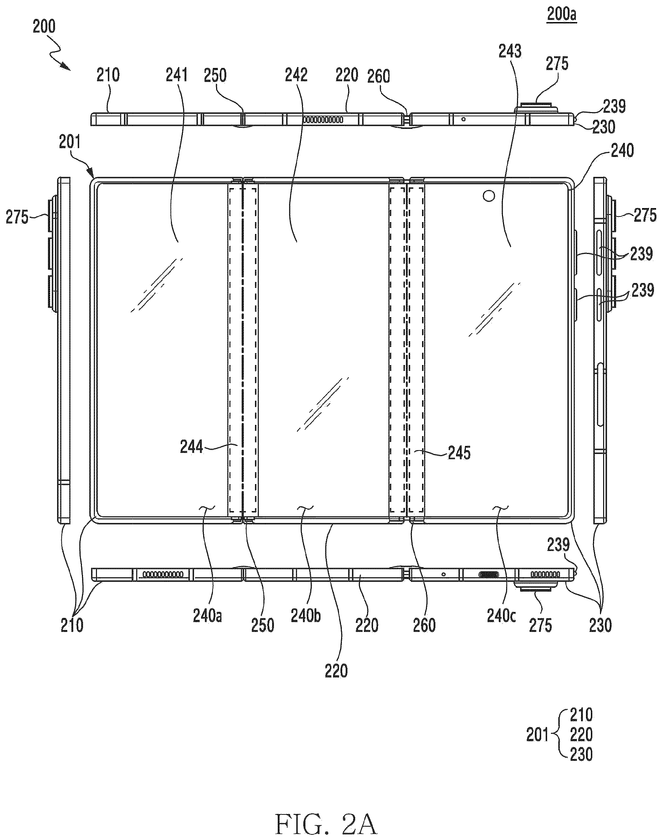

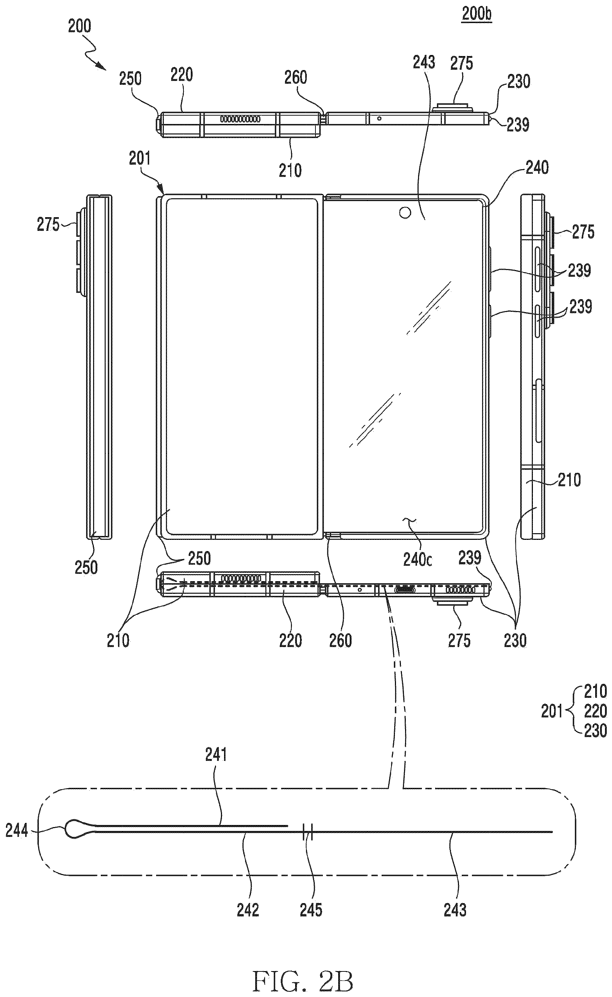

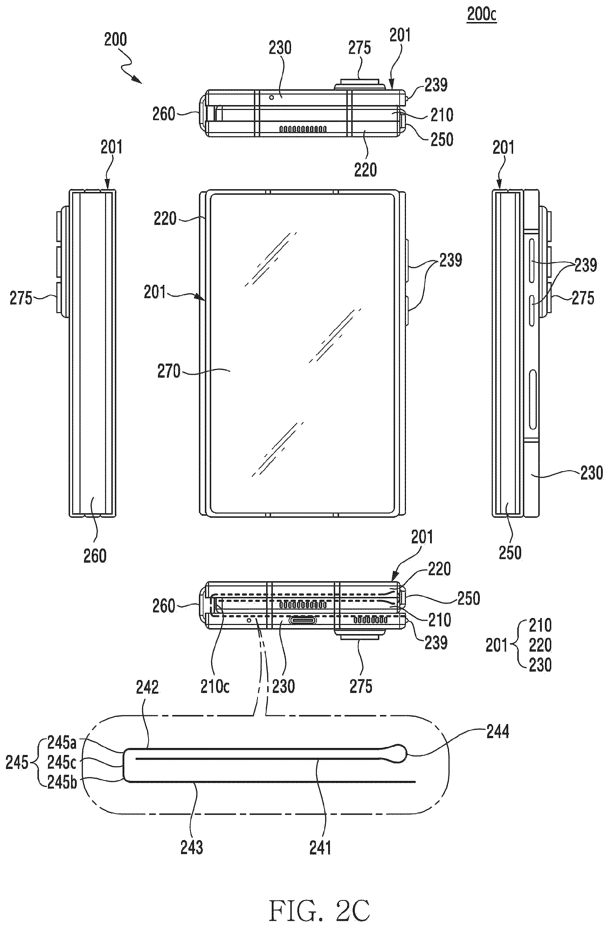

FIG. 2A illustrates an example of a first state of an electronic device. FIG. 2B illustrates an example of a second state of an electronic device. FIG. 2C illustrates an example of a third state of an electronic device.

Referring to FIGS. 2A, 2B, and 2C, a foldable electronic device 200 (e.g., the electronic device 101 of FIG. 1) may include a foldable housing 201, a flexible display 240, a first hinge assembly 250, a second hinge assembly 260, and a display 270. The foldable housing 201 may include a first housing part 210, a second housing part 220, and a third housing part 230.

The first housing part 210 may be rotatably coupled with the second housing part 220 by the first hinge assembly 250. The second housing part 220 and the first housing part 210 may be rotated with respect to the first hinge assembly 250. While the first housing part 210 is rotated with respect to the first hinge assembly 250, the second housing part 220 may be rotated with respect to the first hinge assembly 250.

The third housing part 230 may be rotatably coupled with the second housing part 220 by the second hinge assembly 260. The second housing part 220 and the third housing part 230 may be rotated with respect to the second hinge assembly 260. While the second housing part 220 is rotated with respect to the second hinge assembly 260, the third housing part 230 may be rotated with respect to the second hinge assembly 260.

The first hinge assembly 250 and the second hinge assembly 260 may change a state of the electronic device. The first hinge assembly 250 and the second hinge assembly 260 may provide a first state 200a of the foldable electronic device 200 (or the first state 200a of the foldable housing 201). The first state 200a of the foldable electronic device 200 (or the first state 200a of the foldable housing 201) may be described as an unfolded state of the foldable electronic device 200 (or the foldable housing 201). In the first state 200a, a front side of the first housing part 210, a front side of the second housing part 220, and a front side of the third housing part 230 may define a front side of the foldable electronic device 200. In the first state 200a, the front side of the first housing part 210, the front side of the second housing part 220, and the front side of the third housing part 230 may face the same direction. In the first state 200a, the foldable electronic device 200 may provide a large display region of the flexible display 240 to a user.

The first hinge assembly 250 and the second hinge assembly 260 may provide a second state 200b of the foldable electronic device 200. The second state 200b of the foldable electronic device 200 may be described as a state in which the foldable electronic device 200 is partially folded and partially unfolded (or a single folded state or a half-folded state). For example, in the second state 200b, the front side of the second housing part 220 and the front side of the third housing part 230 may face the same direction, and the front side of the first housing part 210 and the front side of the second housing part 220 may face opposite directions. For example, in the second state 200b, the first housing part 210 and the second housing part 220 may be folded, and the second housing part 220 and the third housing part 230 may be unfolded. In the second state 200b, the foldable electronic device 200 may provide visual information through a portion (e.g., a third display region 240c) of the flexible display 240.

The foldable electronic device 200 may change from the first state 200a to a third state 200c through the second state 200b. The foldable electronic device 200 may change from the first state 200a that is the unfolded state to the second state 200b that is the partially unfolded state. For example, the foldable electronic device 200 may change from the first state 200a in which the first housing part 210, the second housing part 220, and the third housing part 230 face the same direction to the second state 200b in which the front side of the first housing part 210 faces the front side of the second housing part 220. The foldable electronic device 200 may change from the second state 200b that is the partially unfolded state to the third state 200c that is a folded state. For example, when the second state 200b changes to the third state 200c, the first housing part 210 and the second housing part 220 that are folded may be disposed on the third housing part 230.

The first hinge assembly 250 and the second hinge assembly 260 may provide the third state 200c of the foldable electronic device 200 (or the third state 200c of the foldable housing 201). The third state 200c of the foldable electronic device 200 (or the third state 200c of the foldable housing 201) may be described as the folded state (or a multi-folded state) of the foldable electronic device 200 (or the foldable housing 201). In the third state 200c, the front side of the first housing part 210 and the front side of the second housing part 220 may face opposite directions, and the front side of the second housing part 220 and the front side of the third housing part 230 may face opposite directions. In the third state 200c, the front side of the first housing part 210 and the front side of the third housing part 230 may face the same direction. For example, in the third state 200c, the front side of the second housing part 220 may face the front side of the first housing part 210, and the front side of the third housing part 230 may face a rear side of the first housing part 210. A rear side of the second housing part 220 may be exposed to the outside in the third state 200c. The display 270 may be disposed on the rear side of the second housing part 220. A rear side of the third housing part 230 may be exposed to the outside in the third state 200c. A camera 275 may be disposed on the rear side of the third housing part 230. In the third state 200c, the foldable electronic device 200 may be folded to improve portability and may provide visual information through the display 270 disposed on the rear side of the second housing part 220.

The foldable electronic device 200 may further include a key button 239. The key button 239 may be exposed from a structure (e.g., an opening) formed on a lateral side of the third housing part 230 and may partially protrude to the outside of the foldable electronic device 200. The key button 239 may provide a physical input to processing circuitry inside the foldable electronic device 200 by pressure transmitted from the outside. The key button 239 may not be included in the foldable electronic device 200 and may be implemented in another form, such as a soft key displayed on the flexible display 240 or the display 270.

The key button 239 may be disposed on the lateral side of the third housing part 230 so as to be exposed to the outside in the third state 200c. The key button 239 may be disposed in a direction in which the lateral side of the third housing part 230 faces by being disposed on the lateral side of the third housing part 230. Even when changing from the third state 200c to the first state 200a by the user looking at the display 270, a position of the key button 239 disposed on the lateral side of the third housing part 230 may not be moved. For example, referring to FIG. 2A, in the first state 200a, when the flexible display 240 is viewed from above, the key button 239 may be disposed on a right side. Referring to FIG. 2C, in the third state 200c, when the display 270 is viewed from above, the key button 239 may be disposed on the right side.

The flexible display 240 may at least partially define an exterior of the foldable electronic device 200. The flexible display 240 may be partially disposed in the foldable housing 201. The flexible display 240 may define the front side of the foldable electronic device 200. The flexible display 240 may include a first portion 241, a second portion 242, a third portion 243, a first bendable portion 244, and a second bendable portion 245. The first portion 241 of the flexible display 240 may be disposed on the front side of the first housing part 210. The second portion 242 of the flexible display 240 may be disposed on the front side of the second housing part 220. The third portion 243 of the flexible display 240 may be disposed on the front side of the third housing part 230. The first bendable portion 244 of the flexible display 240 may be disposed between the first portion 241 and the third portion 243 of the flexible display 240. For example, the first bendable portion 244 of the flexible display 240 may be disposed on the first hinge assembly 250 connecting the first housing part 210 and the second housing part 220. The second bendable portion 245 of the flexible display 240 may be disposed between the second portion 242 and the third portion 243 of the flexible display 240. For example, the second bendable portion 245 of the flexible display 240 may be disposed on the second hinge assembly 260 connecting the second housing part 220 and the third housing part 230.

The first portion 241 of the flexible display 240, the second portion 242 of the flexible display 240, and the third portion 243 of the flexible display 240 may face substantially the same direction. In the first state 200a, the first bendable portion 244 and the second bendable portion 245 may be disposed on substantially the same horizontal plane as the first portion 241, the second portion 242, and the third portion 243.

The first hinge assembly 250 and the second hinge assembly 260 may provide the second state 200b of the foldable electronic device 200. In the second state 200b, the first portion 241 of the flexible display 240 may face the second portion 242 of the flexible display 240, and the third portion 243 of the flexible display 240 may face the same direction as the second portion 242 of the flexible display 240. For example, the second portion 242 and the third portion 243 may be disposed on substantially the same horizontal plane.

In the second state 200b, as the first bendable portion 244 of the flexible display 240 is bent by the first hinge assembly 250, the first bendable portion 244 of the flexible display 240 may be folded such that the first portion 241 of the flexible display 240 and the second portion 242 of the flexible display 240 face different directions.

In the second state 200b, as the second bendable portion 245 of the flexible display 240 is maintained in the unfolded state by the second hinge assembly 260, the second bendable portion 245 of the flexible display 240 may be unfolded such that the second portion 242 of the flexible display 240 and the third portion 243 of the flexible display 240 face the same direction.

The first hinge assembly 250 and the second hinge assembly 260 may provide the third state 200c of the foldable electronic device 200. In the third state 200c, the second portion 242 of the flexible display 240 may face the first portion 241 of the flexible display 240, and the third portion 243 of the flexible display 240 may face the rear side of the first housing part 210.

In the third state 200c, as the first bendable portion 244 of the flexible display 240 is bent by the first hinge assembly 250, the first bendable portion 244 of the flexible display 240 may be folded such that the first portion 241 of the flexible display 240 and the second portion 242 of the flexible display 240 face different directions.

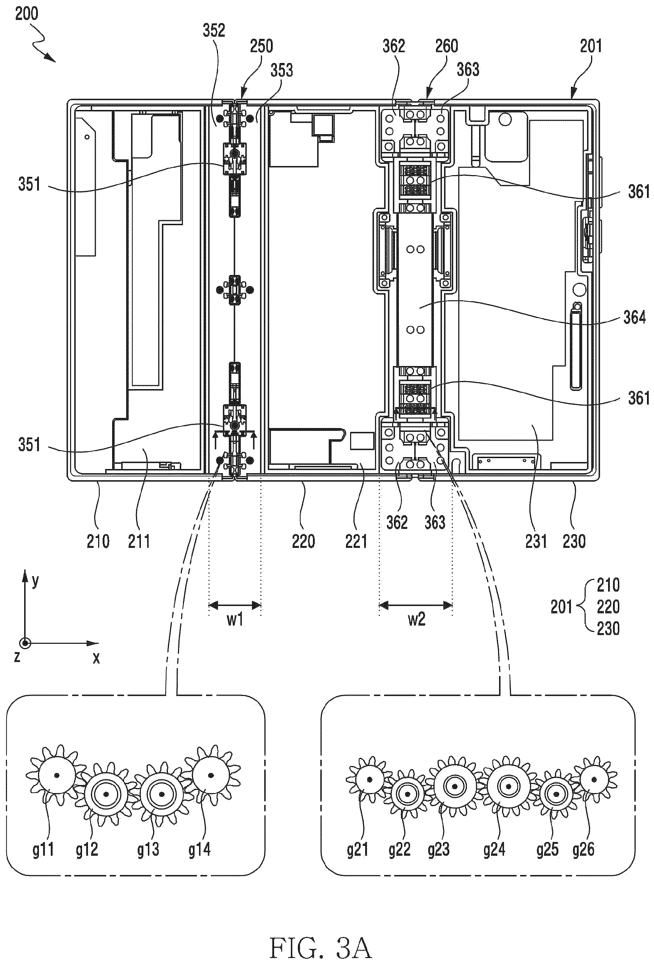

In the third state 200c, as the second bendable portion 245 of the flexible display 240 is bent by the second hinge assembly 260, the second bendable portion 245 of the flexible display 240 may be folded such that the second portion 242 of the flexible display 240 and the third portion 243 of the flexible display 240 face different directions. The second bendable portion 245 may further include a first deformation portion 245a, a second deformation portion 245b, and a planar portion 245c. The first deformation portion 245a may be disposed between the planar portion 245c and the second portion 242, and the second deformation portion 245b may be disposed between the planar portion 245c and the third portion 243. The planar portion 245c may be disposed between the first deformation portion 245a and the second deformation portion 245b. The planar portion 245c may be supported by a support plate (e.g., a support plate 364 of FIG. 3A) that is distinct from hinge plates (e.g., a third hinge plate 362 and a fourth hinge plate 363 of FIG. 3A) of the second hinge assembly 260. Regardless of the state of the foldable electronic device 200, the planar portion 245c may maintain a plane. The first deformation portion 245a and the second deformation portion 245b may be unfolded in the first state 200a and the second state 200b, and in the third state 200c, the first deformation portion 245a and the second deformation portion 245b may be bent such that the second portion 242 and the third portion 243 face different directions. In the third state 200c, the first housing part 210 may be disposed between the second housing part 220 and the third housing part 230. In the third state 200c, the second bendable portion 245 of the flexible display 240 disposed on the second hinge assembly 260 may partially face a lateral side 210c of the first housing part 210.

A display region of the flexible display 240 may include a first display region 240a, a second display region 240b, and a third display region 240c. The display region indicates a region capable of providing visual information from the flexible display 240. In the first state 200a, an entire display region of the flexible display 240 may be viewed from the front side of the foldable housing 201. For example, in the first state 200a, the first display region 240a, the second display region 240b, and the third display region 240c of the flexible display 240 may be visually exposed. The foldable electronic device 200 may provide the user with a large display region including the first display region 240a, the second display region 240b, and the third display region 240c.

In the second state 200b, the display region of the flexible display 240 may be partially visible from the front side of the third housing part 230. For example, the third display region 240c may be visually exposed, and the first display region 240a and the second display region 240b may not be visually exposed.

In the third state 200c, the display region of the flexible display 240 may not be visible. For example, in the third state 200c, the first display region 240a, the second display region 240b, and the third display region 240c of the flexible display 240 may not be visually exposed.

As a non-limiting example, when the flexible display 240 is used to display a screen in the first state 200a of the foldable electronic device 200, the first display region 240a, the second display region 240b, and the third display region 240c of the flexible display 240 may be activated. As a non-limiting example, in the third state 200c, the first display region 240a, the second display region 240b, and the third display region 240c of the flexible display 240 may be deactivated. As a non-limiting example, when the flexible display 240 is used to display a screen in the second state 200b of the foldable electronic device 200, the third display region 240c may be activated, and the first display region 240a and the second display region 240b of the flexible display 240 may be deactivated.

As a non-limiting example, when the flexible display 240 is used to display a screen in the first state 200a of the foldable electronic device 200, the first display region 240a, the second display region 240b, and the third display region 240c of the flexible display 240 may display visual information. As a non-limiting example, in the third state 200c, the first display region 240a, the second display region 240b, and the third display region 240c of the flexible display 240 may provide a black image. As a non-limiting example, when the flexible display 240 is used to display a screen in the second state 200b of the foldable electronic device 200, the third display region 240c may provide the visual information, and the first display region 240a and the second display region 240b of the flexible display 240 may provide the black image.

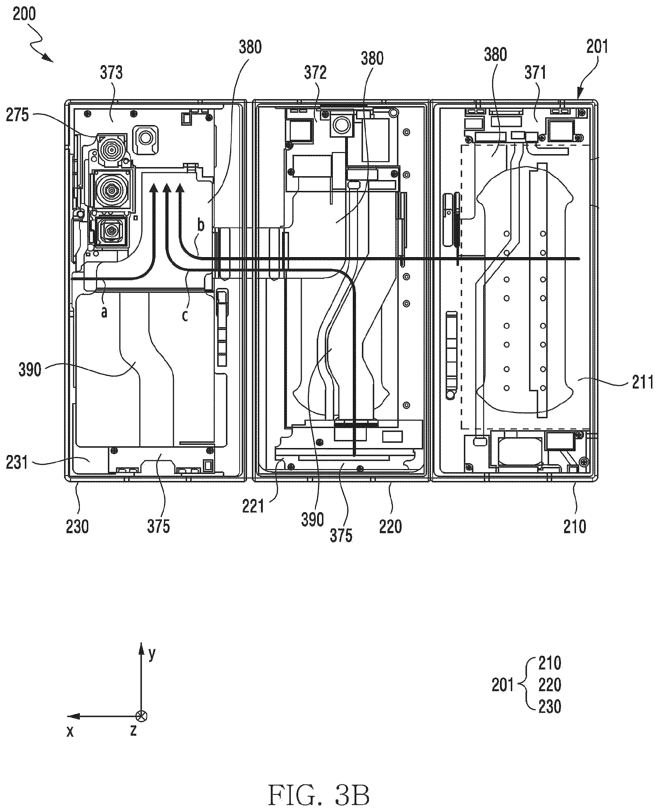

FIG. 3A is a top plan view of an electronic device from which a flexible display is removed. FIG. 3B is a rear view of an electronic device from which a rear cover and a display are removed.

Referring to FIGS. 3A and 3B, a foldable electronic device 200 may include a first hinge assembly 250 and a second hinge assembly 260. A first width w1 of the first hinge assembly 250 may be narrower than a second width w2 of the second hinge assembly 260. A difference between the first width w1 of the first hinge assembly 250 and the second width w2 of the second hinge assembly 260 may be equal to or greater than a thickness of a first housing part 210. For example, the second hinge assembly 260 may have the second width w2 wider than the first width w1 such that the first housing part 210 is disposed between a second housing part 220 and a third housing part 230 according to a third state 200c. The first hinge assembly 250 may be referred to as a narrow hinge structure in terms of having a narrower width than that of the second hinge assembly 260. The second hinge assembly 260 may be referred to as a wide hinge structure in terms of a width wider than that of the first hinge assembly 250.

The first hinge assembly 250 may include a first set 351 of gears, a first hinge plate 352, and a second hinge plate 353. The first hinge plate 352 may be coupled to a first bracket 211 of the first housing part 210. The second hinge plate 353 may be coupled to a second bracket 221 of the second housing part 220. Gears g11, g12, g13, and g14 included in the first set 351 of the gears may be configured to rotate the first hinge plate 352 and the second hinge plate 353. For example, the gears g11, g12, g13, and g14 included in the first set 351 of the gears may rotate the second hinge plate 353 (or the second housing part 220) in conjunction with rotation of the first hinge plate 352 (or the first housing part 210). After the first hinge plate 352 (or the first housing part 210) is rotated, the gears g11, g12, g13, and g14 included in the first set 351 of the gears may be rotated according to the rotation of the first hinge plate 352 (or the first housing part 210). The second hinge plate 353 (or the second housing part 220) may be rotated in conjunction with the rotation of the first hinge plate 352 according to the rotation of the gears included in the first set 351 of the gears. The gears g11, g12, g13, and g14 included in the first set 351 of the gears may include the first gear g11, the second gear g12, the third gear g13, and the fourth gear g14. The first gear g11 may be disposed adjacent to the first hinge plate 352, and the fourth gear g14 may be disposed adjacent to the second hinge plate 353. The second gear g12 and the third gear g13 may be disposed between the first gear g11 and the fourth gear g14. The first gear g11, the second gear g12, the third gear g13, and the fourth gear g14 may be sequentially engaged with each other. According to the rotation of the first gear g11 in a first rotation direction (e.g., clockwise), the second gear g12 engaged with the first gear g11 may be rotated in a second rotation direction (e.g., counterclockwise) opposite to the first rotation direction. According to the rotation of the second gear g12 in the second rotation direction, the third gear g13 engaged with the second gear g12 may be rotated in the first rotation direction. According to the rotation of the third gear g13 in the first rotation direction, the fourth gear g14 may be rotated in the second rotation direction. As the first gear g11 and the fourth gear g14 rotate in different directions, the first housing part 210 connected to the first hinge plate 352 and the second housing part 220 connected to the second hinge plate 353 may be folded or unfolded.

The second hinge assembly 260 may include a second set 361 of gears, a third hinge plate 362, a fourth hinge plate 363, and a support plate 364. The third hinge plate 362 may be coupled to the second bracket 221 of the second housing part 220. The fourth hinge plate 363 may be coupled to a third bracket 231 of the third housing part 230. Gears g21, g22, g23, g24, g25, and g26 included in the second set 361 of the gears may be configured to rotate the third hinge plate 362 and the fourth hinge plate 363. For example, the gears g21, g22, g23, g24, g25, and g26 included in the second set 361 of the gears may rotate the fourth hinge plate 363 (or the third housing part 230) in conjunction with rotation of the third hinge plate 362 (or the second housing part 220). After the third hinge plate 362 (or the second housing part 220) is rotated, the gears g21, g22, g23, g24, g25, and g26 included in the second set 361 of the gears may be rotated according to the rotation of the third hinge plate 362 (or the second housing part 220). The fourth hinge plate 363 (or the third housing part 230) may be rotated in conjunction with the rotation of the third hinge plate 362 according to the rotation of the gears g21, g22, g23, g24, g25, and g26 included in the second set 361 of the gears.

The gears g21, g22, g23, g24, g25, and g26 included in the second set 361 of the gears may include the first gear g21, the second gear g22, the third gear g23, the fourth gear g24, the fifth gear g25, and the sixth gear g26. The first gear g21 may be disposed adjacent to the third hinge plate 362, and the sixth gear g26 may be disposed adjacent to the fourth hinge plate 363. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged with each other. According to the rotation of the first gear g21 in a first rotation direction (e.g., clockwise), the second gear g22 engaged with the first gear g21 may be rotated in a second rotation direction (e.g., counterclockwise) opposite to the first rotation direction. According to the rotation of the second gear g22 in the second rotation direction, the third gear g23 engaged with the second gear g22 may be rotated in the first rotation direction. According to the rotation of the third gear g23 in the first rotation direction, the fourth gear g24 may be rotated in the second rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 220 connected to the third hinge plate 362 and the third housing part 230 connected to the fourth hinge plate 363 may be folded or unfolded.

The first hinge assembly 250 and the second hinge assembly 260 may further include a spiral structure. The spiral structure may include a spiral groove formed in each hinge plate or a rotating member connected to the hinge plate and a moving member sliding along the spiral groove. The hinge plates connected to the hinge assembly may be configured to rotate at substantially the same angular displacement through the spiral structure.

The foldable electronic device 200 may include a first printed circuit board 371, a second printed circuit board 372, and a third printed circuit board 373.

The first printed circuit board 371 may be disposed on the first bracket 211 of the first housing part 210. A hardware component in the first housing part 210 may be disposed on the first printed circuit board 371. The second printed circuit board 372 may be disposed on the second bracket 221 of the second housing part 220. The third printed circuit board 373 may be disposed on the third bracket 231 of the third housing part 230. A hardware component in the third housing part 230 may be disposed on the third printed circuit board 373.

A hardware component disposed on the first printed circuit board 371 may support a hardware component disposed on the second printed circuit board 372 and/or a hardware component disposed on the third printed circuit board 373 or independently operate.

The hardware component disposed on the second printed circuit board 372 may support the hardware component disposed on the first printed circuit board 371 or the third printed circuit board 373 or independently operate.

The hardware component disposed on the second printed circuit board 372 may include a speaker, a front camera, and/or display driving circuitry.

The hardware component disposed on the third printed circuit board 373 may include at least one processor (e.g., an application processor (AP) or a communication processor (CP)) including processing circuitry, memory including one or more storage mediums, communication circuitry, and a rear camera 275. The rear camera 275 may be exposed through a structure (e.g., an opening) of a rear side of the third housing part 230.

The foldable electronic device 200 may further include a sub-printed circuit board 375 and flexible printed circuit boards 380 and 390. The sub-printed circuit board 375 may be disposed on at least a portion of the first housing part 210, the second housing part 220, and the third housing part 230. The flexible printed circuit boards 380 and 390 may include the first flexible printed circuit board 380 and the second flexible printed circuit board 390. The first flexible printed circuit board 380 may electrically connect a printed circuit board disposed on each of the housing parts 210, 220, and 230. The second flexible printed circuit board 390 may connect a printed circuit board and the sub-printed circuit board 375 in the housing part in which the sub-printed circuit board 375 is disposed.

Components in the foldable electronic device 200 may be connected to the at least one processor in the third printed circuit board 373 through the flexible printed circuit boards 380 and 390. For example, a signal received from an antenna disposed in the third housing part 230 may be transmitted to the third printed circuit board 373 in which the at least one processor (e.g., the AP or the CP) is disposed through a signal path (a) provided by the first flexible printed circuit board 380. Driving circuitry for a flexible display 240 disposed in the first housing part 210 may be connected to the third printed circuit board 373 in which the at least one processor (e.g., the AP) is disposed through a signal path (b) provided by the sub-printed circuit board 375 and the first flexible printed circuit board 380. Driving circuitry for the display 270 connected to the sub-printed circuit board 375 disposed in the second housing part 220 may be electrically connected to the third printed circuit board 373 in which the at least one processor (e.g., the AP) is disposed through a signal path (c) provided by the sub-printed circuit board 375, the first flexible printed circuit board 380, and the second flexible printed circuit board 390.

The foldable electronic device 200 may further include batteries. Each of the batteries may be attached to the brackets 211, 221, and 231 included in the housing parts 210, 220, and 230. The brackets 211, 221, and 231 may support rechargeable batteries.

The disposition of the hardware components is exemplary, and unlike the above description, the rear camera 275 and the second printed circuit board 372 may be disposed in the third housing part 230, and the third printed circuit board 373 may be disposed in the second housing part 220.

The first housing part 210 and the third housing part 230 are indicated to rotate in an opposite direction with respect to the second housing part 220, but are not limited thereto. For example, while changing from a first state 200a to a third state 200c, the first housing part 210 may rotate counterclockwise with respect to the second housing part 220, and the third housing part 230 may rotate counterclockwise with respect to the second housing part 220. As the first housing part 210 and the third housing part 230 rotate in the same direction, a portion of a display region of the flexible display 240 may be visually exposed in a second state.

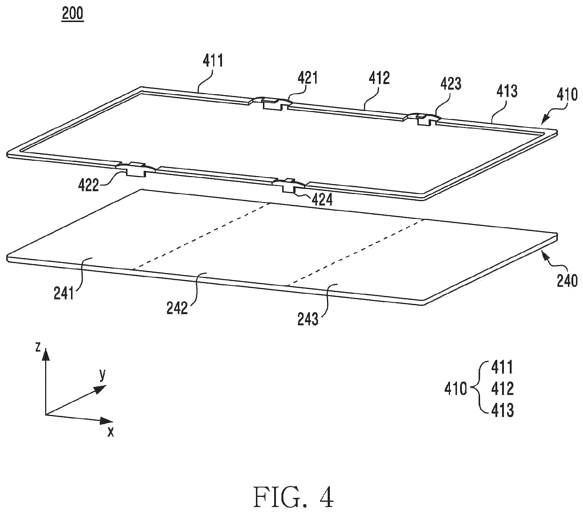

FIG. 4 illustrates a front deco and a flexible display of a foldable electronic device according to an embodiment.

Referring to FIG. 4, a foldable electronic device 200 may include front decos 410 for covering and protecting a peripheral portion of a flexible display 240. The front decos 410 may define a portion of a front side of the foldable electronic device 200. The front decos 410 may protect the flexible display 240 by at least partially covering the peripheral portion of the flexible display 240. For example, the front decos 410 may be disposed above (e.g., in a +z direction) the flexible display 240. Each of the front decos 410 may be referred to as a front frame, a decoration, a decorative frame, or decorative panel.

For example, the front decos 410 (e.g., the front frames) may include a first front deco 411 covering a portion of a peripheral portion of a first portion 241 of the flexible display 240, a second front deco 412 covering a portion of a peripheral portion of a second portion 242 of the flexible display 240, and a third front deco 413 covering a portion of a peripheral portion of a third portion 243 of the flexible display 240. Since a portion of the flexible display 240 may be deformed, the first front deco 411 and the third front deco 413 may be spaced from the second front deco 412. For example, a gap between the first front deco 411 and the second front deco 412 may be greater than a gap between the second front deco 412 and the third front deco 413.

The front decos 410 may define the portion of the front side of the foldable electronic device 200. For example, the first front deco 411 may define a portion of a front side of a first housing part (e.g., the first housing part 210 of FIG. 2A). The second front deco 412 may define a portion of a front side of a second housing part 220. The third front deco 413 may define a portion of a front side of a third housing part 230. The front decos 410 may be referred to as protective frames, decorative frames, or cover frames in terms of protecting and covering a portion of the flexible display 240, respectively.

The foldable electronic device 200 according to an embodiment may include caps for reducing an inflow of a foreign substance (e.g., dust) between the front decos 410. The caps may reduce the inflow of the foreign substance by filling a gap between the front decos 410. The caps may include a first cap 421 and a second cap 422 that are disposed between the first front deco 411 and the second front deco 412, and a third cap 423 and a fourth cap 424 that are disposed between the second front deco 412 and the third front deco 413.

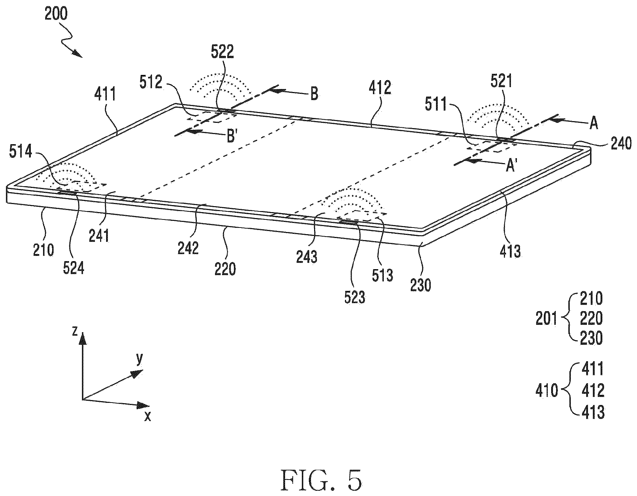

FIG. 5 is a top plan view of a foldable electronic device in an unfolded state.

Referring to FIG. 5, a flexible display 240 and front decos 410 may define a front side of a foldable electronic device 200. The front side of the foldable electronic device 200 may be referred to as a side of the foldable electronic device 200 facing the +z direction of FIG. 5. For example, a first front deco 411 and a first portion 241 of the flexible display 240 may at least partially define a front side of a first housing part 210. A second front deco 412 and a second portion 242 of the flexible display 240 may at least partially define a front side of a second housing part 220. A third front deco 413 and the third portion 243 of the flexible display 240 may at least partially define a front side of a third housing part 230.

The foldable electronic device 200 may include a sound output module (e.g., the sound output module 155 of FIG. 1). In the following description, a speaker is described as an example of the sound output module, but embodiments of the present disclosure are not limited thereto. For example, the sound output module may include the speaker or a receiver.

The foldable electronic device 200 may include speakers. The speakers may be disposed in a foldable housing 201. The speakers may output audio signals. The audio signals outputted from the speakers may be provided outside the foldable housing 201 through an audio duct formed inside the foldable housing 201. Each of the speakers may include a diaphragm, a magnet, and a voice coil for outputting the audio signals.

The foldable electronic device 200 may include a first speaker 511 disposed in the third housing part 230 and a second speaker 512 disposed in the first housing part 210. For example, the first speaker 511 may be disposed adjacent to an upper portion (e.g., a +y direction) of the third housing part 230, and the second speaker 512 may be disposed adjacent to an upper portion of the first housing part 210.

The foldable electronic device 200 may further include a third speaker 513 disposed in the third housing part 230 and a fourth speaker 514 disposed in the first housing part 210. For example, the third speaker 513 may be disposed adjacent to a lower portion (e.g., a -y direction) of the third housing part 230, and the fourth speaker 514 may be disposed adjacent to a lower portion of the first housing part 210. The foldable electronic device 200 may be configured to provide a stereophonic sound by using two or more of the speakers.

In an unfolded state of the foldable electronic device 200, the speakers may be configured to provide audio signals (e.g., sound signals) toward the front side of the foldable electronic device 200 to provide a rich sound effect. When the audio signals are provided toward the front side of the foldable electronic device 200, the rich sound effect may be provided to a user.

For example, the user may hold a lateral side of the foldable electronic device 200 with a hand and look at the flexible display 240 of the foldable electronic device 200. When the speakers provide audio signals toward the lateral side of the foldable electronic device 200, as the lateral side is blocked by the hand of the user, the audio signals may not be properly provided. Audio signals provided toward the front side of the foldable electronic device 200 may be provided toward the front side of the foldable electronic device 200 facing the user, not the lateral side of the foldable electronic device 200 in contact with the hand of the user.

For example, when the foldable electronic device 200 in the unfolded state is used by being mounted on a cradle, the cradle may support the lateral side of the foldable electronic device 200. When the foldable electronic device 200 provides audio signals toward the lateral side of the foldable electronic device 200, as the lateral side is blocked by the cradle, the audio signals may not be properly provided. Audio signals provided toward the front side of the foldable electronic device 200 may be provided toward the front side of the open foldable electronic device 200, not the lateral side of the foldable electronic device 200 in contact with the cradle.

In the unfolded state of the foldable electronic device 200, the foldable electronic device 200 may have a structure that provides front radiation of audio signals such that the audio signals may be provided toward the front side of the foldable electronic device 200. As described above, the front decos 410 may define a portion of the front side of the foldable electronic device 200. For example, the third portion 243 of the flexible display 240 may define a portion of the front side of the third housing part 230, and the third front deco 413 may define another portion of the front side of the third housing part 230. Since the third front deco 413 defines the other portion of the front side of the third housing part 230, the third front deco 413 may include a structure for audio signals outputted from the first speaker 511 and the third speaker 513 disposed in the third housing part 230.

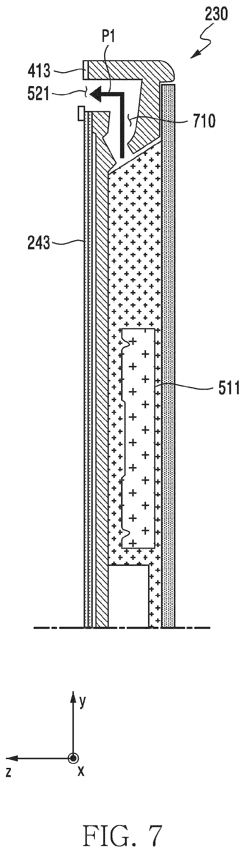

The third front deco 413 may include a first through hole 521. The first through hole 521 may be arranged with respect to the first speaker 511 such that audio signals outputted from the first speaker 511 may be provided toward the front side of the foldable electronic device 200. As will be described later, the first through hole 521 may be aligned with a first audio duct (e.g., a first audio duct 710 of FIG. 7) arranged with respect to the first speaker 511. In the unfolded state of the foldable electronic device 200, the audio signals outputted from the first speaker 511 may be provided toward the front side of the foldable electronic device 200 through a first path (e.g., a first path P1 of FIG. 7) formed by the first audio duct 710 and the first through hole 521. In the present disclosure, through holes may be referred to as speaker holes.

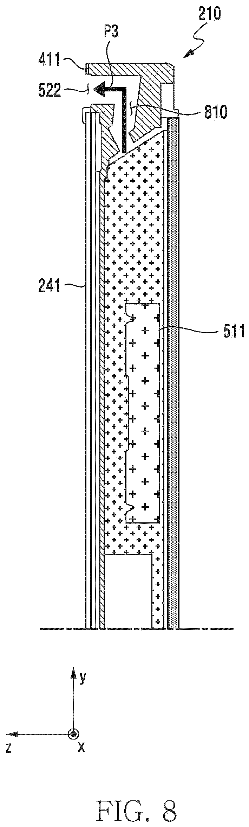

The first front deco 411 partially defining a front side of the first housing part 210 may include a second through hole 522 for the second speaker 512 disposed in the first housing part 210. The second through hole 522 may be arranged with respect to the second speaker 512 such that audio signals outputted from the second speaker 512 may be provided toward the front side of the foldable electronic device 200. As will be described later, the second through hole 522 may be aligned with a second audio duct (e.g., the second audio duct 810 of FIG. 8) arranged with respect to the second speaker 512. In the unfolded state of the foldable electronic device 200, the audio signals outputted from the second speaker 512 may be provided toward the front side of the foldable electronic device 200 through a third path (e.g., a third path P3 of FIG. 8) formed by the second audio duct 810 and the second through hole 522.

In the present disclosure, for convenience of explanation, a structure (e.g., the first audio duct 710 and the first through hole 521) associated with the first speaker 511 and a structure (e.g., the second audio duct 810 and the second through hole 522) associated with the second speaker 512 are described, but the structures may be applied substantially the same to a structure associated with the third speaker 513 and a structure associated with the fourth speaker 514, respectively. For example, for audio signals outputted from the third speaker 513, the third front deco 413 may further include a third through hole 523, and the third housing part 230 may further include an audio duct. For audio signals outputted from the fourth speaker 514, the fourth front deco may further include a fourth through hole 524, and the first housing part 210 may further include an audio duct.

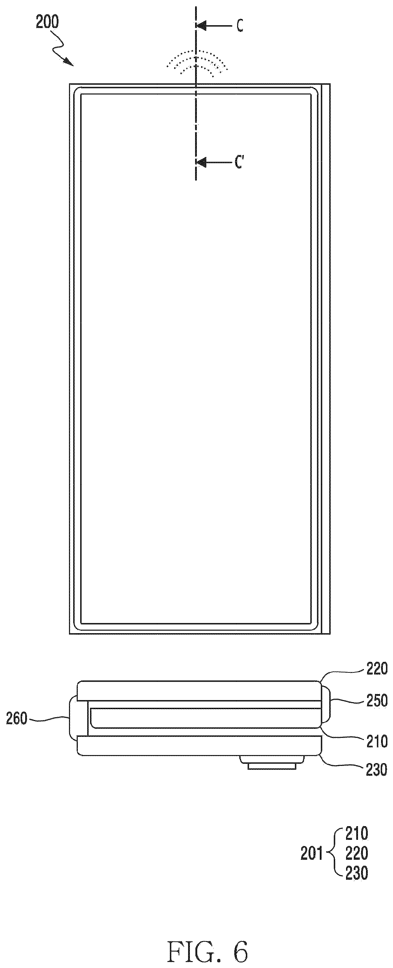

FIG. 6 is a top plan view of a foldable electronic device in a folded state.

Referring to FIG. 6, a first housing part 210, a second housing part 220, and a third housing part 230 may overlap in a folded state of a foldable electronic device 200. In the folded state of the foldable electronic device 200, a front side of the first housing part 210 may face a front side of the second housing part 220, and a front side of the third housing part 230 may face a rear side of the first housing part 210. A first hinge assembly 250 and a second hinge assembly 260 may be configured to provide the folded state of the foldable electronic device 200 having the front side of the third housing part 230 facing the rear side of the first housing part 210.

In the folded state of the foldable electronic device 200, a front side of the foldable electronic device 200 may be covered by a foldable housing 201 without being exposed to the outside. In the folded state, since the front side of the foldable electronic device 200 is not exposed to the outside, audio signals outputted from speakers may be blocked by the foldable housing 201. In the folded state of the foldable electronic device 200, a structure in which the audio signals outputted from the speakers may be provided outside the foldable electronic device 200 may be required.

The speakers may be configured to provide the audio signals toward a lateral side of the foldable electronic device 200 in the folded state of the foldable electronic device 200. Hereinafter, a structure of the foldable electronic device 200 for providing the audio signals to the front side or the lateral side of the foldable electronic device 200 according to a state of the foldable electronic device 200 will be described.

FIG. 7 is a cross-sectional view of a foldable electronic device cut along line A-A' of FIG. 5.

Referring to FIG. 7, a third housing part 230 may include a first speaker 511 and a first audio duct 710. The first audio duct 710 may be arranged with respect to the first speaker 511, and may be aligned with a first through hole 521 (e.g., a first speaker hole) of a third front deco 413. For example, the first audio duct 710 may extend from an end connected to an inner space of the third housing part 230 where the first speaker 511 is disposed to another end aligned with the first through hole 521. For example, the end of the first audio duct 710 may face the inside of the third housing part 230, and the other end of the first audio duct 710 opposite the end may face the third front deco 413. For example, the other end of the first audio duct 710 may be referred to as a third speaker hole.

In an unfolded state of a foldable electronic device 200, the first speaker 511 may be configured to provide audio signals toward a front side of the foldable electronic device 200 through a first path P1. For example, the first path P1 may be formed by the first audio duct 710 and the first through hole 521 of the third front deco 413. For example, the audio signals outputted from the first speaker 511 may be radiated to the front side of the foldable electronic device 200 through the first path P1 formed along the first audio duct 710 and the first through hole 521 of the third front deco 413. In the unfolded state of the foldable electronic device 200, since a front side of the third front deco 413 is opened, the audio signals radiated through the first path P1 may be provided to a user.

The structure illustrated in FIG. 7 may be substantially equally applied to the third speaker 513 of FIG. 5.

FIG. 8 is a cross-sectional view of a foldable electronic device cut along line B-B' of FIG. 5.

Referring to FIG. 8, a first housing part 210 may include a second speaker 512 and a second audio duct 810. The second audio duct 810 may be arranged for the second speaker 512 and aligned with a second through hole 522 (e.g., a second speaker hole) of a first front deco 411. For example, the second audio duct 810 may extend from an end connected to an inner space of a first housing part 210 where the second speaker 512 is disposed to another end aligned with the second through hole 522. For example, the end of the second audio duct 810 may face the inside of the first housing part 210, and the other end of the second audio duct 810 opposite the end may face the first front deco 411. For example, the other end of the second audio duct 810 may be referred to as a fourth speaker hole.

In an unfolded state of a foldable electronic device 200, the second speaker 512 may be configured to provide audio signals toward a front side of the foldable electronic device 200 through a third path P3. For example, the third path P3 may be formed by the second audio duct 810 and the second through hole 522 of the first front deco 411. For example, the audio signals outputted from the second speaker 512 may be radiated to the front side of the foldable electronic device 200 through the third path P3 formed along the second audio duct 810 and the second through hole 522 of the first front deco 411. In the unfolded state of the foldable electronic device 200, since a front side of the first front deco 411 is opened, the audio signals radiated through the third path P3 may be provided to a user.

The structure illustrated in FIG. 8 may be substantially equally applied to the fourth speaker 514 of FIG. 5.

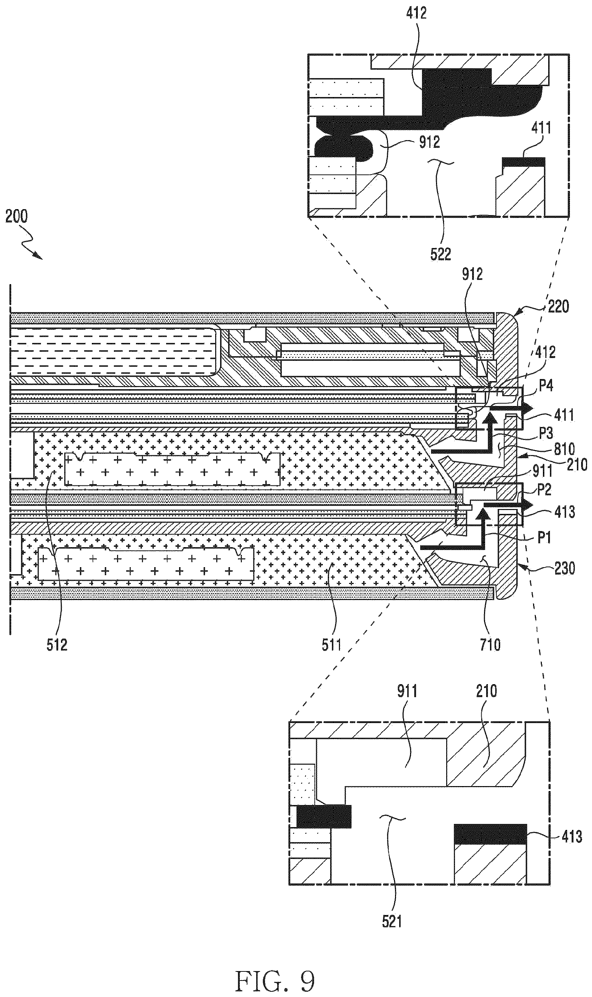

FIG. 9 is a cross-sectional view of a foldable electronic device cut along line C-C' of FIG. 6.

Referring to FIG. 9, in a folded state of a foldable electronic device 200, a front side of the foldable electronic device 200 may be blocked. For example, in the folded state of the foldable electronic device 200, a front side of a first housing part 210 and a front side of a second housing part 220 may face each other, and a rear side of the first housing part 210 and a front side of a third housing part 230 may face each other. Since the front side of the third housing part 230 is blocked by the rear side of the first housing part 210, a first path P1 described above may be blocked by a rear side of the third housing part 230. Since the front side of the first housing part 210 is blocked by the front side of the second housing part 220, a third path P3 described above may be blocked by the front side of the second housing part 220.

In an unfolded state of the foldable electronic device 200, a first speaker 511 may be configured to provide audio signals toward a lateral side of the foldable electronic device 200 through the first path P1 and a second path P2. The second path P2 may be formed by a gap between a third front deco 413 defining a portion of the front side of the third housing part 230 and the rear side of the first housing part 210. In other words, a path provided to the audio signals may include a gap between the rear side of the first housing part 210 and the front side of the third housing part 230, not a gap between the front side of the first housing part 210 and the front side of the third housing part 230.

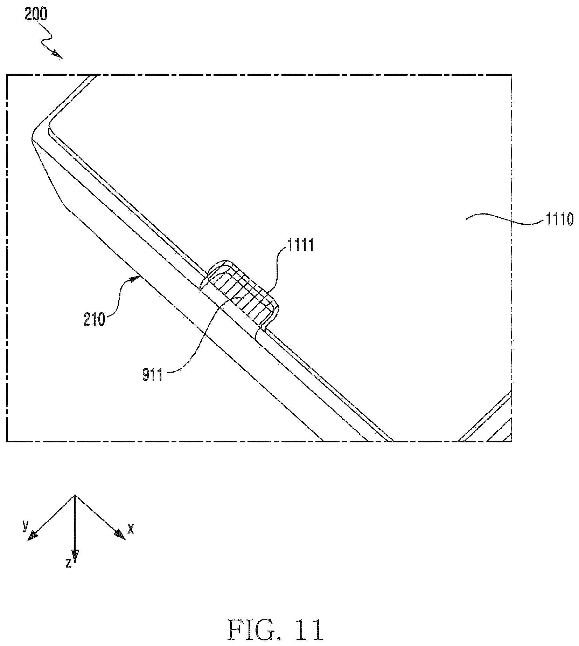

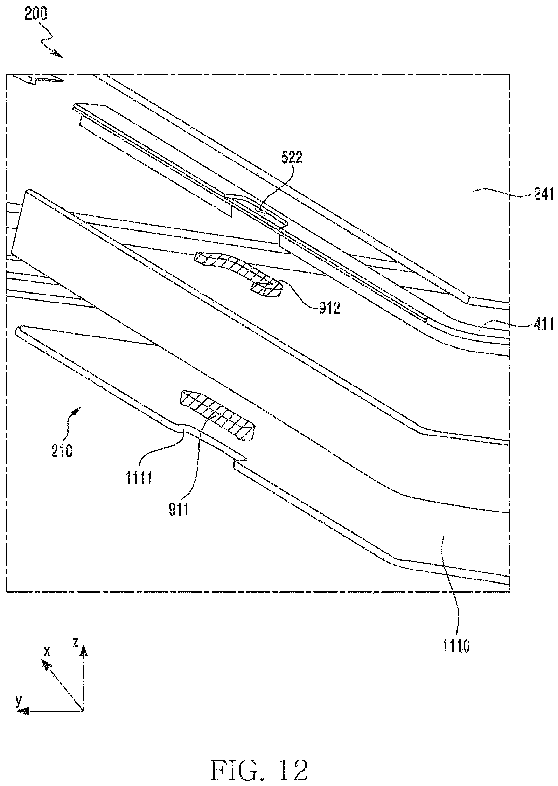

In the folded state of the foldable electronic device 200, the rear side of the first housing part 210 may include a portion spaced apart from the third front deco 413 to define the gap between the rear side of the first housing part 210 and the third front deco 413. For example, the portion may be defined by a first sealant 911. A structure of the first sealant 911 will be described later with reference to FIGS. 11 and 12.

A gap may be formed between a first through hole 521 of the third front deco 413 and the portion of the rear side of the first housing part 210. The gap may form the second path P2 for the audio signals outputted from the first speaker 511. The second path P2 may be connected to the first path P1 formed by a first audio duct 710 and the first through hole 521. The audio signals outputted from the first speaker 511 may be provided toward the lateral side of the foldable electronic device 200 by the second path P2 formed by the gap and the first path P1. For example, when audio signals are outputted from the first speaker 511 disposed in the third housing part 230, the audio signals may be radiated toward the lateral side of the foldable electronic device 200 along the first path P1 and the second path P2. Since the lateral side of the foldable electronic device 200 is opened, the audio signals radiated toward the lateral side may be provided to a user.

As the audio signals are provided toward the lateral side of the foldable electronic device 200 through the first path P1 and the second path P2, a separate speaker hole for the first speaker 511 may be omitted from the lateral side of the foldable electronic device 200. As the speaker hole is omitted from the lateral side of the foldable electronic device 200, quality of an exterior of the foldable electronic device 200 may be improved, and a degree of design freedom may be secured.

The descriptions of the structures associated with the first speaker 511 described above may be substantially equally applied to the third speaker 513 of FIG. 5.

In the unfolded state of the foldable electronic device 200, a second speaker 512 may be configured to provide audio signals toward the lateral side of the foldable electronic device 200 through the third path P3 and a fourth path P4. The fourth path P4 may be formed by a gap between a first front deco 411 and a second front deco 412. In order to seal the gap between the first front deco 411 and the second front deco 412, the foldable electronic device 200 may include a second sealant 912.

In the folded state of the foldable electronic device 200, the first front deco 411 and the second front deco 412 may define the gap between the first front deco 411 and the second front deco 412. For example, the first front deco 411 and the second front deco 412 may form the gap by including an inclined portion inclined toward the lateral side of the foldable electronic device 200. For example, in the folded state of the foldable electronic device 200, a second through hole 522 of the first front deco 411 may not be blocked by the second front deco 412.

A gap may be formed between the second through hole 522 of the first front deco 411 and the second front deco 412. The gap may form the fourth path P4 for the audio signals outputted from the second speaker 512. The fourth path P4 may be connected to the second path P2 formed by a second audio duct 810 and the second through hole 522. The audio signals outputted from the second speaker 512 may be provided toward the lateral side of the foldable electronic device 200 by the fourth path P4 formed by the gap and the second path P2. For example, when audio signals are outputted from the second speaker 512 disposed in the first housing part 210, the audio signals may be radiated toward the lateral side of the foldable electronic device 200 along the third path P3 and the fourth path P4. Since the lateral side of the foldable electronic device 200 is opened, the audio signals radiated toward the lateral side may be provided to the user.

As the audio signals are provided toward the lateral side of the foldable electronic device 200 through the third path P3 and the fourth path P4, a separate speaker hole for the second speaker 512 may be omitted from the lateral side of the foldable electronic device 200. As the speaker hole is omitted from the lateral side of the foldable electronic device 200, the quality of the exterior of the foldable electronic device 200 may be improved, and the degree of design freedom may be secured.

The descriptions of the structures associated with the second speaker 512 described above may be substantially equally applied to the fourth speaker 514 of FIG. 5.

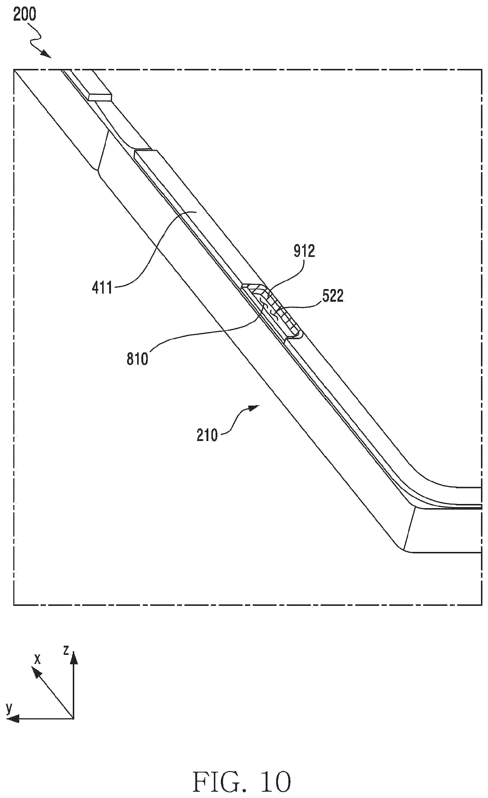

FIG. 10 is a front perspective view with respect to a portion of a first housing part of a foldable electronic device. FIG. 11 is a rear perspective view with respect to a portion of a first housing part of a foldable electronic device. FIG. 12 is an exploded perspective view of the first housing part of FIG. 10.

Referring to FIG. 10, a first front deco 411 may include a second through hole 522. As described above, a second through hole 522 may be aligned with a second audio duct (e.g., the second audio duct 810 of FIG. 8). In an unfolded state of a foldable electronic device 200, audio signals outputted from a second speaker (e.g., the second speaker 512 of FIG. 5) disposed in a first housing part 210 may be provided toward a front side (e.g., a +z direction) of the foldable electronic device 200 through the second through hole 522.

The foldable electronic device 200 may include a second sealant 912. The second sealant 912 may seal an area around the second through hole 522 of the first front deco 411. For example, in case that the area around the second through hole 522 is not sealed when the audio signals outputted from the second speaker 512 are provided through the second through hole 522 of the first front deco 411, the audio signals may be provided in a direction different from the front side of the foldable electronic device 200. The second sealant 912 may reduce leakage of the audio signals in directions different from the front side of the foldable electronic device 200 by sealing the area around the second through hole 522 of the first front deco 411.

Referring to FIG. 11, a portion of a rear side of the first housing part 210 may include a dented (indented) portion 1111 that is indented toward a front side of the first housing part 210. For example, as a portion of a rear plate 1110 defining the rear side of the first housing part 210 is dented, the dented portion 1111 may be formed. In a folded state of the foldable electronic device 200, the dented portion 1111 may be formed in a region of the rear side of the first housing part 210 overlapping a first through hole (e.g., the first through hole 521 of FIG. 5) of a third front deco. In case that the rear side of the first housing part 210 blocks the first through hole 521 of the third front deco 413 in the folded state of the foldable electronic device 200, audio signals outputted from a first speaker 511 may not be provided outside the foldable electronic device 200. A gap may be formed between the third front deco 413 and the rear side of the first housing part 210 by the dented portion 1111. As described above, the gap may form a second path (e.g., the second path P2 of FIG. 9) for the audio signals outputted from a first speaker (e.g., the first speaker 511 of FIG. 9) disposed in the third housing part 230.

A first sealant 911 may be disposed in the dented portion 1111. In the folded state of the foldable electronic device 200, the first sealant 911 may be configured to seal another gap between the rear side of the first housing part 210 and the third front deco 413 distinguished from the gap forming the second path P2 such that the audio signals outputted from the first speaker 511 may be provided toward a lateral side of the foldable electronic device 200 through the second path P2.

Referring to FIG. 12, a second sealant 912 may be disposed under a first front deco 411. In the folded state of the foldable electronic device 200, the second sealant 912 may not seal the direction toward the lateral side such that audio signals outputted from a second speaker (e.g., the second speaker 512 of FIG. 9) disposed in the first housing part 210 may be radiated toward the lateral side of the foldable electronic device 200. The second sealant 912 may seal the area around the second through hole 522 of the first front deco 411 such that the audio signals do not leak in directions different from the direction toward the lateral side.

The first sealant 911 may be disposed in the dented portion 1111. In the folded state of the foldable electronic device 200, the first sealant 911 disposed in the dented portion 1111 may be in contact with a portion of a third front deco (e.g., the third front deco 413 of FIG. 9) and may be spaced apart from the first through hole (e.g., the first through hole 521 of FIG. 9) of the third front deco 413. The first sealant 911 may seal a gap between the rear side of the first housing part 210 and the portion of the third front deco 413 such that the audio signals outputted from the first speaker (e.g., the first speaker 511 of FIG. 9) disposed in the third housing part (e.g., the third housing part 230 of FIG. 9) do not leak in the directions different from the direction toward the lateral side of the foldable electronic device 200.

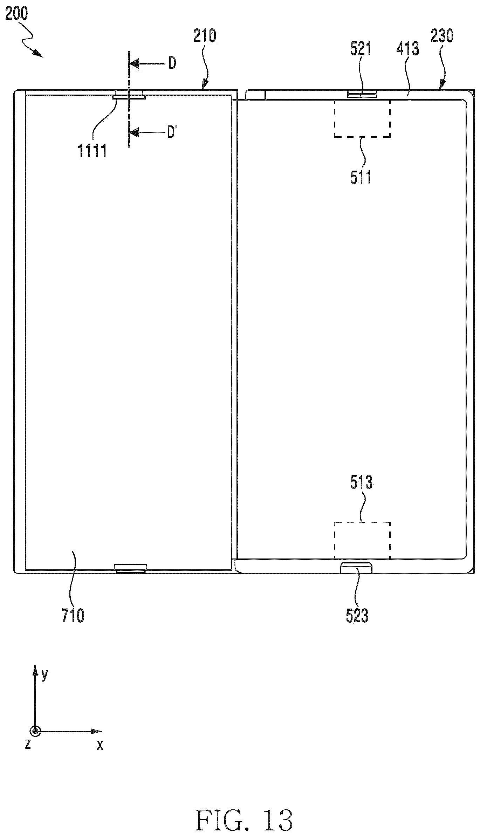

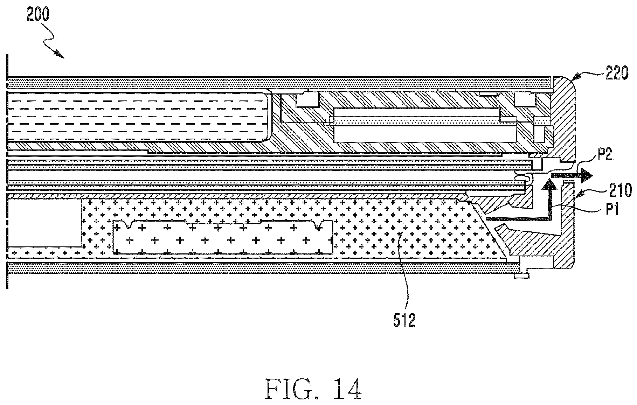

FIG. 13 illustrates an intermediate state of a foldable electronic device. FIG. 14 is a cross-sectional view of a foldable electronic device cut along line D-D' of FIG. 13.

Referring to FIG. 13, in an intermediate state of a foldable electronic device 200, a front side of a first housing part 210 and a front side of a second housing part (e.g., the second housing part 220 of FIG. 9) face each other, and a front side of a third housing part 230 may be opened.

In the intermediate state of the foldable electronic device 200, the front side of the third housing part 230 may be opened. For example, a first through hole 521 of a third front deco 413 may be opened. Since the first through hole 521 of the third front deco 413 is opened, audio signals output from a first speaker 511 disposed in the third housing part 230 may be provided toward a front side of the foldable electronic device 200. For example, in the intermediate state of the foldable electronic device 200, the audio signals outputted from the first speaker 511 may be radiated toward the front side of the foldable electronic device 200 through a first path (e.g., the first path P1 of FIG. 7). The descriptions may be applied substantially equally to a third speaker 513 disposed in the third housing part 230 and a third through hole 523 of the third front deco 413.

Referring to FIG. 14, since the first housing part 210 overlaps the second housing part 220 in the intermediate state of the foldable electronic device 200, audio signals outputted from a second speaker 512 disposed in the first housing part 210 may be provided toward a lateral side of the foldable electronic device 200. For example, in the intermediate state of the foldable electronic device 200, the audio signals outputted from the second speaker 512 may be radiated toward the lateral side of the foldable electronic device 200 through a third path P3 and a fourth path P4.

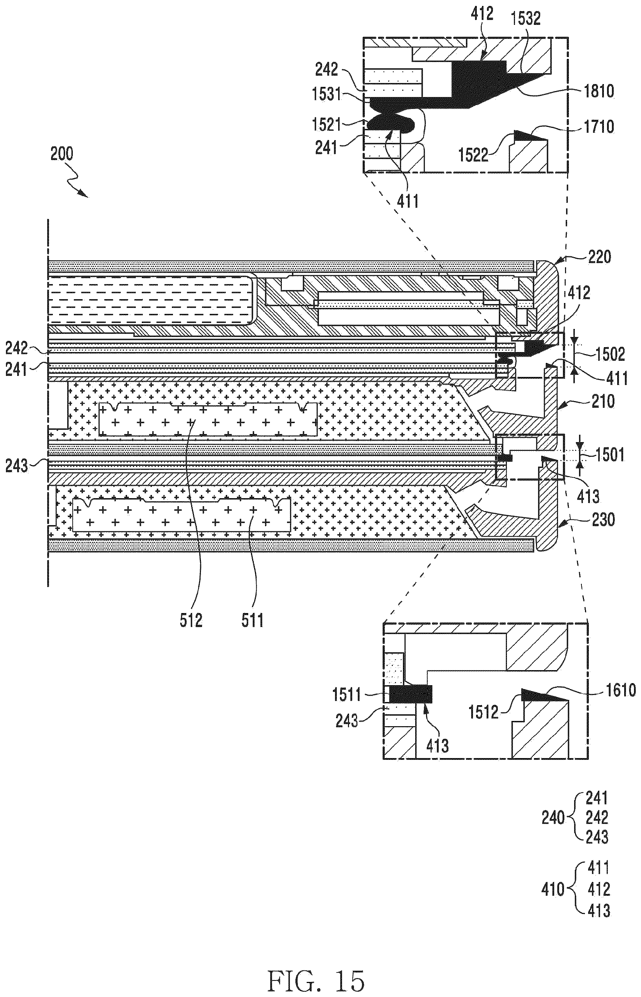

FIG. 15 is a cross-sectional view of a foldable electronic device cut along line C-C' of FIG. 6.

According to a Helmholtz resonator calculation formula for a resonator calculation, a resonant frequency of audio signals outputted from a speaker may be determined based on a volume of a resonator, a cross-sectional area of a resonator inlet, and a length of the resonator inlet. Equation 1 below is the Helmholtz resonator calculation formula.

[Equation 1]

$$f = \frac{v}{2\pi}\sqrt{\frac{A}{Vl}}$$

(Herein, f is the resonant frequency, A is the cross-sectional area of the inlet, V is the volume of the resonator, l is the length of the resonator inlet, and v is velocity of sound.)

According to the Equation 1, the resonant frequency of the audio signals is affected by the cross-sectional area of the resonator inlet. In case that the cross-sectional area of the resonator inlet is reduced, the resonant frequency may be reduced. In case that the resonant frequency is reduced, a bandwidth of the speaker may be narrowed.

Referring to FIG. 15, in a folded state of a foldable electronic device 200, a first inlet of a resonator associated with a first speaker 511 disposed in a third housing part 230 may be referred to as a first gap 1501 between a third front deco 413 and a rear side of a first housing part 210 on a lateral side of a foldable housing 201. By a thickness of the third front deco 413, in case that the first gap 1501 is reduced, a cross-sectional area of the first inlet of the resonator associated with the first speaker 511 may be reduced. As described above, in case that the cross-sectional area of the first inlet is reduced, a resonance frequency of audio signals outputted from the first speaker 511 may be reduced, and a bandwidth of the first speaker 511 may be narrowed according to the reduction of the resonance frequency.

In the folded state of the foldable electronic device 200, a second inlet of a resonator associated with a second speaker 512 disposed in the first housing part 210 may be referred to as a second gap 1502 between a first front deco 411 and a second front deco 412 on the lateral side of the foldable housing 201. By a thickness of the first front deco 411 and a thickness of the second front deco 412, in case that the second gap 1502 is reduced, a cross-sectional area of the second inlet of the resonator associated with the second speaker 512 may be reduced. As described above, in case that the cross-sectional area of the second inlet is reduced, a resonance frequency of audio signals outputted from the second speaker 512 may be reduced, and a bandwidth of the second speaker 512 may be narrowed according to the reduction of the resonance frequency.

The foldable electronic device 200 may have a structure for expanding the cross-sectional area of the first inlet and the cross-sectional area of the second inlet, in order to expand the bandwidth of the first speaker 511 and the bandwidth of the second speaker 512.

The third front deco 413 may include a first portion 1511 and a second portion 1512. For example, as illustrated in FIG. 15, the first portion 1511 of the third front deco 413 may cover a peripheral portion of the third portion 243 of a flexible display 240. In the folded state of the foldable electronic device 200, the first portion 1511 of the third front deco 413 may be in contact with a portion of a rear side of the first housing part 210. The second portion 1512 of the third front deco 413 may be in contact with the third housing part 230. In the folded state of the foldable electronic device 200, the second portion 1512 of the third front deco 413 may be spaced apart from the rear side of the first housing part 210.

The first front deco 411 may include a third portion 1521 and a fourth portion 1522. For example, as illustrated in FIG. 15, the third portion 1521 of the first front deco 411 may cover a peripheral portion of the first portion 241 of the flexible display 240. In the folded state of the foldable electronic device 200, the third portion 1521 of the first front deco 411 may be in contact with a portion of the second front deco 412. The fourth portion 1522 of the first front deco 411 may be in contact with the first housing part 210. In the folded state of the foldable electronic device 200, the fourth portion 1522 of the first front deco 411 may be spaced apart from the second front deco 412. The second front deco 412 may include a fifth portion 1531 and a sixth portion 1532. For example, as illustrated in FIG. 15, the fifth portion 1531 of the second front deco 412 may cover a peripheral portion of the second portion 242 of the flexible display 240. In the folded state of the foldable electronic device 200, the fifth portion 1531 of the second front deco 412 may be in contact with the third portion 1521 of the first front deco 411. The sixth portion 1532 of the second front deco 412 may be in contact with the second housing part 220. In the folded state of the foldable electronic device 200, the sixth portion 1532 of the second front deco 412 may be spaced apart from the fourth portion 1522 of the first front deco 411.

Hereinafter, a detailed structure of front decos 410 for expanding a cross-sectional area of a resonator inlet will be described.

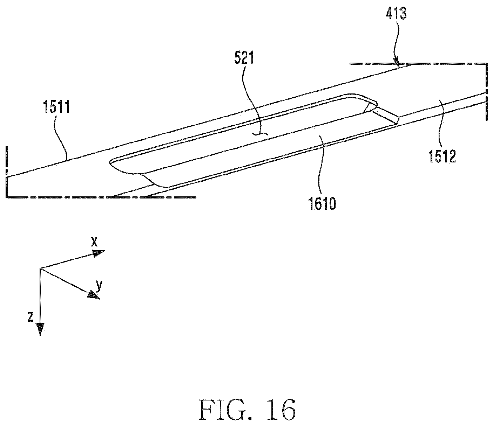

FIG. 16 illustrates a third front deco of a foldable electronic device.

Referring to FIG. 16, a third front deco 413 may include a first through hole 521, a first portion 1511, and a second portion 1512. As described above, the first part 1511 of the third front deco 413 may cover a peripheral portion of a third portion (e.g., the third portion 243 of FIG. 15) of a flexible display (e.g., the flexible display 240 of FIG. 15). In a folded state of a foldable electronic device 200, the second portion 1512 of the third front deco 413 may be in contact with a third housing part (e.g., the third housing part 230 of FIG. 15).

The second portion 1512 of the third front deco 413 may include an inclined portion 1610 inclined toward a lateral side of the foldable electronic device (e.g., the foldable electronic device 200 of FIG. 15) in order to expand a gap between a rear side of a first housing part (e.g., the first housing part 210 of FIG. 15). For example, a direction toward the lateral side of the foldable electronic device 200 may be referred to as a +y direction of FIG. 16. As the second portion 1512 of the third front deco 413 is inclined toward the lateral side of the foldable electronic device 200, a thickness of the inclined portion 1610 of the third front deco 413 may be thinner as it is closer to the lateral side of the foldable electronic device 200. The inclined portion 1610 may define the first through hole 521. As illustrated in FIG. 16, the inclined portion 1610 may be formed in a portion in contact with the first through hole 521 with in the second portion 1512 of the third front deco 413.

Referring back to FIG. 15, in the folded state of the foldable electronic device 200, as the second portion 1512 of the third front deco 413 includes the inclined portion 1610 inclined toward the lateral side of the foldable electronic device 200, a first gap 1501 defining a first inlet may increase. As the first gap 1501 increases, a cross-sectional area of the first inlet of a resonator associated with a first speaker 511 may increase. Since the cross-sectional area of the first inlet may be increased by the second portion 1512 of the third front deco 413 having an inclined structure, a bandwidth of the first speaker 511 may be expanded.

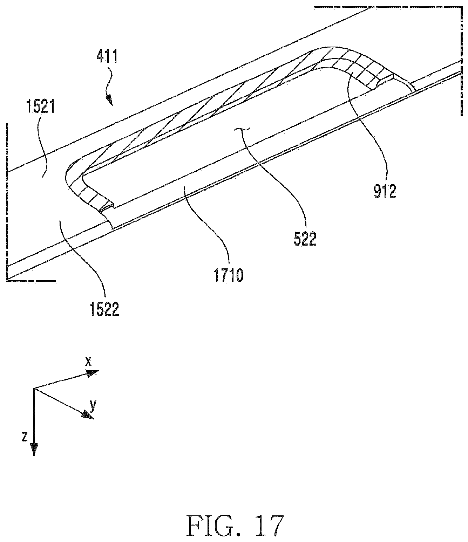

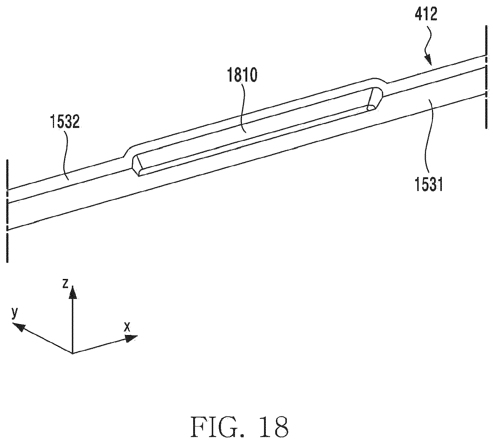

FIG. 17 illustrates a first front deco of a foldable electronic device. FIG. 18 illustrates a second front deco of a foldable electronic device.

Referring to FIGS. 17 and 18, a first front deco 411 and a second front deco 412 may include an inclined portion to expand a bandwidth of a second speaker 512.

Referring to FIG. 17, the first front deco 411 may include a second through hole 522, a third portion 1521, and a fourth portion 1522. As described above, the third portion 1521 of the first front deco 411 may cover a peripheral portion of a first portion (e.g., the first portion 241 of FIG. 15) of a flexible display (e.g., the flexible display 240 of FIG. 15). In a folded state of a foldable electronic device (e.g., the foldable electronic device 200 of FIG. 15), the fourth portion 1522 of the first front deco 411 may be in contact with a first housing part (e.g., the first housing part 210 of FIG. 15).

The fourth portion 1522 of the first front deco 411 may include an inclined portion 1710 inclined toward a lateral side of the foldable electronic device 200, in order to expand a gap between a sixth portion (e.g., the sixth portion 1532 of FIG. 15) of the second front deco (e.g., the second front deco 412 of FIG. 15) and the fourth portion 1522 of the first front deco 411. As the fourth portion 1522 of the first front deco 411 is inclined toward the lateral side of the foldable electronic device 200, a thickness of the inclined portion 1710 of the first front deco 411 may be thinner as it is closer to the lateral side of the foldable electronic device 200. The inclined portion 1710 may define the second through hole 522. As illustrated in FIG. 17, the inclined portion 1710 may be formed in a portion in contact with the second through hole 522 within the fourth portion 1522 of the first front deco 411. A second sealant 912 may not be disposed in the inclined portion 1710 of the first front deco 411. For example, the second sealant 912 sealing an area around the second through hole 522 may be omitted in the inclined portion 1710.

Referring to FIG. 18, the second front deco 412 may include a fifth portion 1531 and a sixth portion 1532. As described above, the fifth portion 1531 of the second front deco 412 may cover a peripheral portion of a second portion (e.g., the second portion 242 of FIG. 15) of the flexible display (e.g., the flexible display 240 of FIG.15), and the sixth portion 1532 of the second front deco 412 may be in contact with a second housing part (e.g., the second housing part 220 of FIG. 15).

The sixth portion 1532 of the second front deco 412 may include an inclined portion 1810 inclined toward the lateral side of the foldable electronic device 200 in order to expand a gap between the fourth portion 1522 of the second front deco (e.g., the second front deco 412 of FIG. 15) and the sixth portion of the second front deco 412. As the sixth portion 1532 of the second front deco 412 is inclined toward the lateral side of the foldable electronic device 200, a thickness of the sixth portion 1532 of the second front deco 412 may be thinner as it is closer to the lateral side of the foldable electronic device 200. The inclined portion 1810 may face the second through hole 522 of the first front deco 411. As illustrated in FIG. 18, the inclined portion 1810 may be formed in a portion facing the second through hole (e.g., the second through hole 522 of FIG. 15) within the sixth portion 1532 of the second front deco 412.

Referring back to FIG. 15, in the folded state of the foldable electronic device 200, as the fourth portion 1522 of the first front deco 411 and the sixth portion 1532 of the second front deco 412 include the inclined portions 1710 and 1810 inclined toward the lateral side of the foldable electronic device 200, the second gap 1502 defining a second inlet may increase. As the second gap 1502 increases, a cross-sectional area of the second inlet of a resonator associated with a second speaker 512 may increase. Since the cross-sectional area of the second inlet may be increased by the fourth portion 1522 of the first front deco 411 and the sixth portion 1532 of the second front deco 412 having an inclined structure, a bandwidth of the second speaker 512 may be expanded.

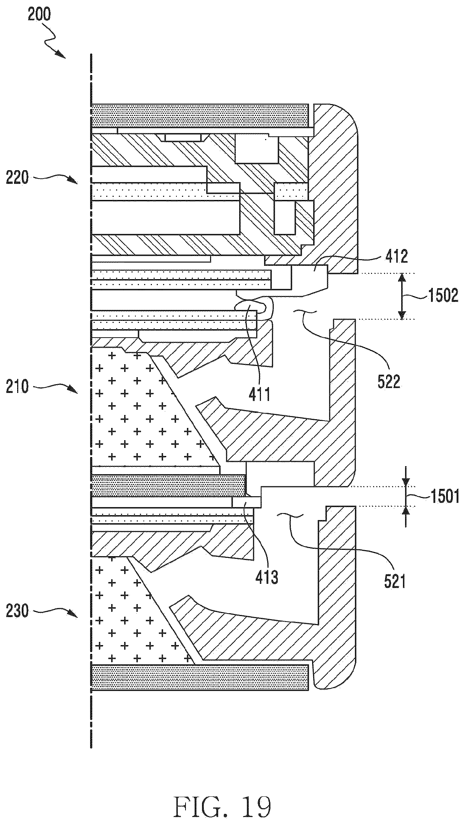

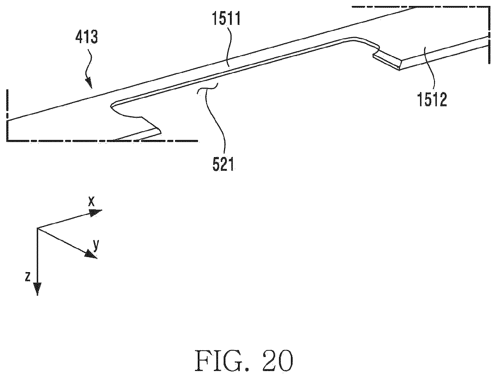

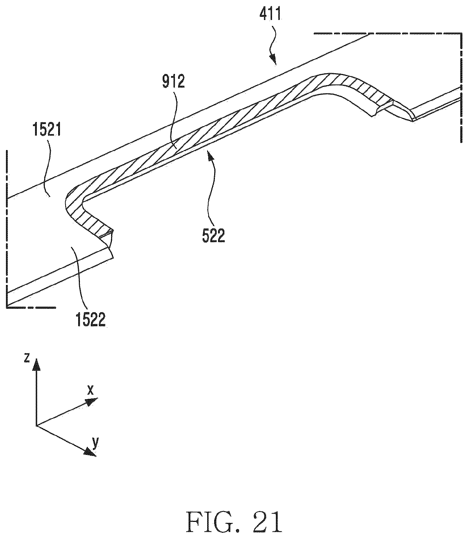

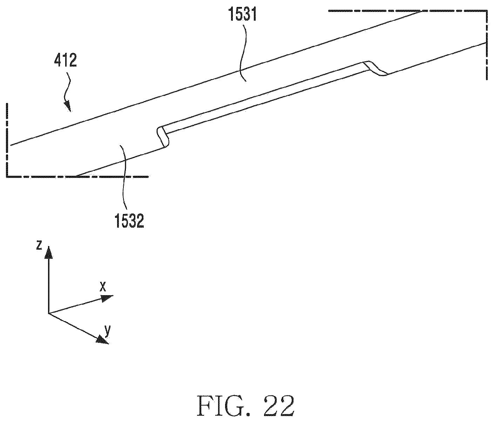

FIG. 19 is a cross-sectional view of a foldable electronic device cut along line C-C' of FIG. 6. FIG. 20 illustrates a third front deco of a foldable electronic device. FIG. 21 illustrates a first front deco of a foldable electronic device. FIG. 22 illustrates a second front deco of a foldable electronic device.

Referring to FIGS. 19 and 20, a second portion (e.g., the second portion 1512 of FIG. 15) of a third front deco 413 may be at least partially omitted to expand a cross-sectional area of a first inlet. For example, as illustrated in FIG. 20, the second portion 1512 of the third front deco 413 may be omitted around a first through hole 521. As the second portion 1512 of the third front deco 413 is omitted around the first through hole 521, the first through hole 521 may be opened to the outside of the third front deco 413. As described above, since the second portion 1512 of the third front deco 413 is in contact with a third housing part 230, a first gap 1501 may be expanded as the second portion 1512 of the third front deco 413 is omitted around the first through hole 521. As the first gap 1501 is expanded, the cross-sectional area of the first inlet may be expanded.

Referring to FIGS. 19, 21, and 22, a fourth portion (e.g., the fourth portion 1522 of FIG. 15) of a first front deco 411 and a sixth portion (e.g., the sixth portion 1532 of FIG. 15) of a second front decoration 412 may be at least partially omitted to expand a cross-sectional area of a second inlet. For example, as illustrated in FIG. 21, the fourth portion 1522 of the first front deco 411 may be omitted around a second through hole 522. As the fourth portion 1522 of the first front deco 411 is omitted around the second through hole 522, the second through hole 522 may be opened to the outside of the first front deco 411. For example, as illustrated in FIG. 22, the sixth portion 1532 of the second front deco 412 may be omitted in a region facing the second through hole (e.g., the second through hole 522 of FIG. 19). As the fourth portion 1522 of the first front deco 411 is omitted around the second through hole 522, and the sixth portion 1532 of the second front deco 412 is omitted in the region facing the second through hole 522, a second gap 1502 between the fourth portion 1522 of the first front deco 411 and the sixth portion 1532 of the second front deco 412 may be increased. As the second gap 1502 increases, the cross-sectional area of the second inlet may be expanded.

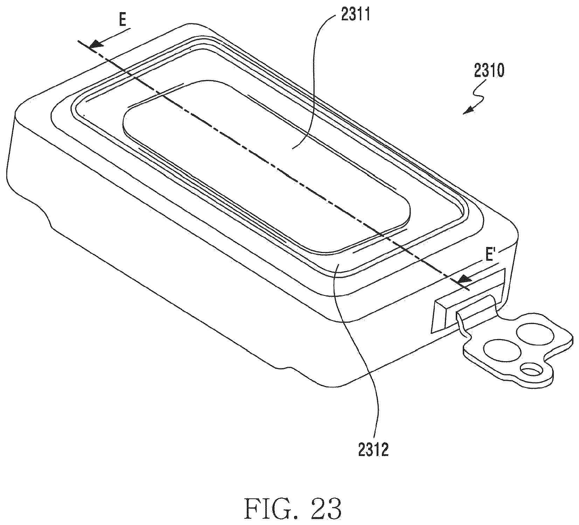

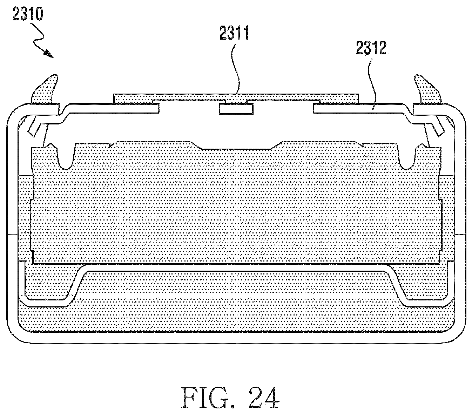

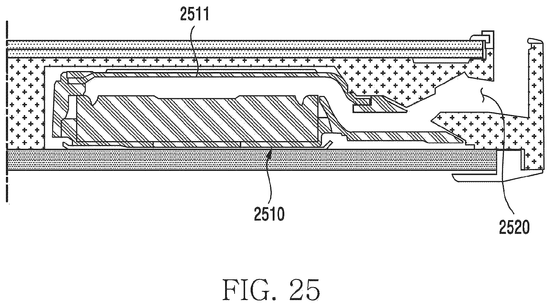

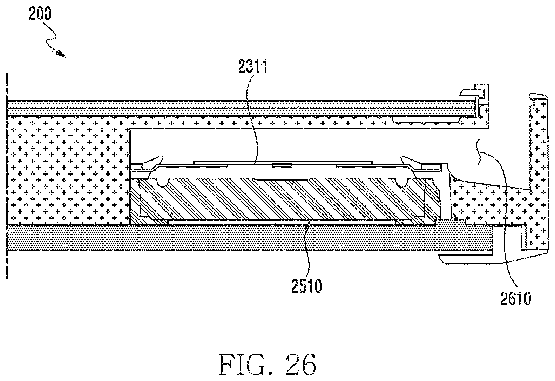

FIG. 23 illustrates a speaker of a foldable electronic device. FIG. 24 is a cross-sectional view of a speaker cut along line E-E' of FIG. 23. FIG. 25 illustrates an audio duct associated with a speaker including an enclosure. FIG. 26 illustrates an audio duct associated with a speaker that does not include an enclosure.

Referring to FIG. 23, speakers (e.g., the first speaker 511, the second speaker 512, the third speaker 513, and/or the fourth speaker 514 of FIG. 5) disposed in a foldable housing (e.g., the foldable housing 201 of FIG. 5) may not include an enclosure. A speaker 2310 that does not include the enclosure may be a speaker in which the enclosure surrounding a diaphragm 2311 is not provided, and the diaphragm 2311 may be exposed to the outside. For example, the speaker 2310 that does not include the enclosure may be referred to as an all metal encapsulation (AME) type speaker, but is not limited thereto.

Referring to FIG. 24, the speakers (e.g., the first speaker 511, the second speaker 512, the third speaker 513, and/or the fourth speaker 514 of FIG. 5) may be referred to as the speaker 2310 including the diaphragm 2311 and a frame 2312 supporting the diaphragm 2311. Since the diaphragm 2311 is exposed to the outside, audio signals generated by vibration of the diaphragm 2311 may be emitted toward a front side. Since the speaker 2310 of the structure illustrated in FIGS. 23 and 24 does not include the enclosure, a length of an audio duct may be reduced.

Referring to FIG. 25, in case of a speaker 2510 including an enclosure 2511, audio signals may be generated inside the enclosure 2511. In order for the audio signals generated inside the enclosure 2511 to be provided to the outside through an audio duct 2520, the audio duct 2520 may be connected to the enclosure 2511. Since the audio duct 2520 has to be connected to the inside of the enclosure 2511, a length of the audio duct 2520 may increase. In case that the length of the audio duct 2520 increases, as a diffraction characteristic of high-pitched audio signals is deteriorated, a frequency response characteristic of the speaker 2510 to the high-pitched audio signals may be lowered.

As described above, a foldable electronic device 200 may include the speaker 2310 that does not include the enclosure. Referring to FIG. 26, in case of the speaker 2310 that does not include the enclosure, a length of an audio duct 2610 may be relatively short. In case of the speaker 2310 that does not include the enclosure, since the audio signals generated by the vibration of the diaphragm 2311 are radiated to the front side of the speaker 2310, the audio duct 2610 may be in a space of the front side of the speaker 2310. Since the audio duct 2610 does not need to extend to be connected to the enclosure, the length of the audio duct 2610 may be relatively reduced. As the length of the audio duct 2610 is reduced, a frequency response characteristic of the speaker 2310 to the high-pitched audio signals may be improved. The speaker 2310 of FIG. 26 may correspond to the speakers (e.g., the first speaker 511, the second speaker 512, the third speaker 513, and/or the fourth speaker 514 of FIG. 5) of FIG. 5.

Referring back to FIG. 9, in the foldable electronic device 200, in a folded state of the foldable electronic device 200, a path of audio signals may be lengthened. For example, in the folded state of the foldable electronic device 200, the first speaker 511 may provide audio signals toward a lateral side of the foldable electronic device 200 through a first path P1 and a second path P2. In case of an unfolded state of the foldable electronic device 200, since the first speaker 511 may provide audio signals toward a front side of the foldable electronic device 200 through the first path P1, a path of the audio signals from the first speaker 511 may be lengthened in the folded state of the foldable electronic device 200. In the folded state of the foldable electronic device 200, the second speaker 512 may provide audio signals toward the lateral side of the foldable electronic device 200 through a third path P3 and a fourth path P4. In case of the unfolded state of the foldable electronic device 200, since the second speaker 512 may provide the audio signals toward the front side of the foldable electronic device 200 through the third path P3, a path of the audio signals from the second speaker 512 may be lengthened in the folded state of the foldable electronic device 200.

The first speaker 511 and/or the second speaker 512 may not include the enclosure. As described above, in case of a speaker that does not include the enclosure, a length of an audio duct may be relatively reduced. For example, in case that the first speaker 511 does not include the enclosure, a length of a first audio duct 710 may be reduced. In case that the second speaker 512 does not include the enclosure, a length of a second audio duct 810 may be reduced. As the length of the first audio duct 710 and/or the length of the second audio duct 810 are shortened, a frequency response characteristic of the first speaker 511 and/or the second speaker 512 to the high-pitched audio signals may be improved.

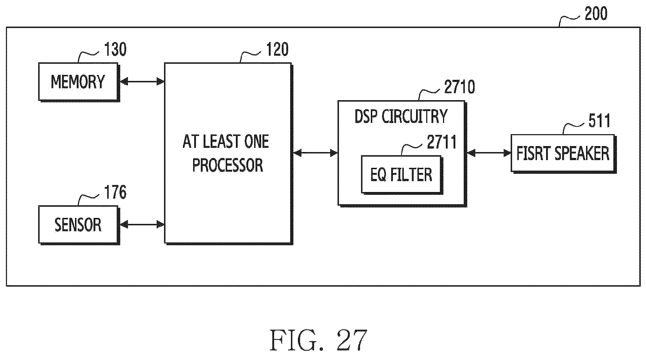

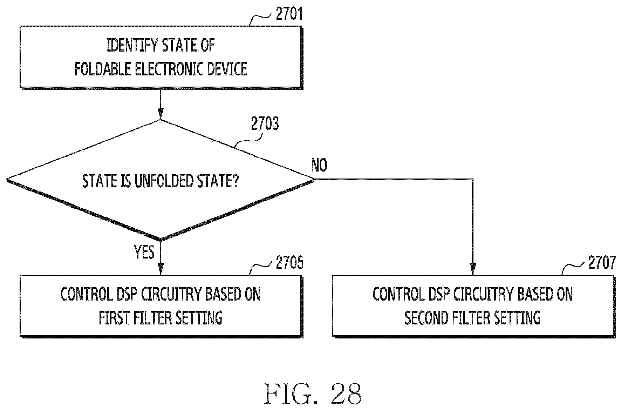

FIG. 27 is a block diagram of a foldable electronic device. FIG. 28 is a flowchart illustrating an operation in which a foldable electronic device controls a quality of audio signals outputted from a speaker based on a state of the foldable electronic device.

Referring to FIG. 27, a foldable electronic device 200 may include at least one processor (e.g., the processor 120 of FIG. 1), memory (e.g., the memory 130 of FIG. 1), a sensor (e.g., the sensor module 176 of FIG. 1), and digital signal processing (DSP) circuitry 2710.

The at least one processor 120 may include processing circuitry. The at least one processor 120 may include an application processor (AP, e.g., a central processing unit (CPU)) and/or a communication processor (CP, e.g., a modem), but is not limited thereto. The at least one processor 120 may include a graphics processing device (e.g., GPU), a neural network processing unit (NPU) (e.g., an artificial intelligence (AI) chip, a wireless-fidelity (Wi-Fi) chip, a Bluetooth™ chip, a global positioning system (GPS) chip, a near field communication (NFC) chip, connectivity chips, a sensor controller, a touch controller, a finger-print sensor controller, a display drive integrated circuit (DDI), an audio CODEC chip, a universal serial bus (USB) controller, a camera controller, an image processing IC, a micro processor unit (MPU), a system on chip (SoC), an IC, or a circuit similar thereto.

The memory 130 may include one or more storage media storing instructions. It should be understood that a combination of a block of each flowchart, and flowcharts in the present disclosure may be performed by one or more computer programs including the instructions that are executable by a computer. All of the one or more computer programs may be stored in a single memory, or the one or more computer programs may be divided into different portions stored in different multiplex memories.

The at least one processor 120 may be configured to identify a state of the foldable electronic device 200. For example, the foldable electronic device 200 may include a sensor 176. For example, the sensor 176 may include a Hall sensor 176 configured to measure a strength of a magnetic field caused by a magnet disposed in a foldable housing 201 and provide data indicating the strength of the measured magnetic field to the at least one processor 120. The at least one processor 120 may be configured to identify the state of the foldable electronic device 200 based on the data provided from the sensor 176.

The DSP circuitry 2710 may be electrically connected to speakers (e.g., the first speaker 511 of FIG. 5). The DSP circuitry 2710 may be configured to control a quality of audio signals outputted from the first speaker 511. For example, the DSP circuitry 2710 may include an equalizer (EQ) filter 2711 configured to adjust a volume for each frequency band of the audio signals. For example, the EQ filter 2711 may be configured to adjust a frequency response characteristic of the first speaker 511 for a specific frequency band.

As described above, a path for audio signals provided from speakers may be changed according to the state of the foldable electronic device 200. For example, the audio signals outputted from the first speaker 511 may be provided toward a front side of the foldable electronic device 200 through a first path (e.g., the first path P1 of FIG. 9) in an unfolded state of the foldable electronic device 200. The audio signals outputted from the first speaker 511 may be provided toward a lateral side of the foldable electronic device 200 through the first path P1 and a second path (e.g., the second path P2 of FIG. 9) in a folded state of the foldable electronic device 200.

Since a path through which audio signals are provided are different according to the state of the foldable electronic device 200, a quality of the audio signals provided to a user may vary. According to the Equation 1, as a length of a resonator inlet increases, a resonant frequency of the audio signals may be reduced. In the folded state of the foldable electronic device 200, since the path through which the audio signals are provided further includes the second path P2, a resonance frequency of the audio signals outputted from the first speaker 511 may be reduced. In the folded state of the foldable electronic device 200, as the resonance frequency of the audio signals is reduced, a bandwidth of the first speaker 511 may be reduced, and loss of high-pitched audio signals may occur. A sound pressure level (SPL) of the audio signals may differ according to the frequency band of the audio signals. As the resonance frequency of the audio signals is changed according to the state of the foldable electronic device 200, the quality of the audio signals provided to the user may be different.

The foldable electronic device 200 may be configured to control the DSP circuitry 2710 based on the state of the foldable electronic device 200 in order to provide audio signals of substantially constant quality independently of the state of the foldable electronic device 200. In operations described below, for convenience of explanation, the audio signals outputted from the first speaker 511 are described, but embodiments are not limited thereto. For example, the operations described below may be applied substantially equally to a second speaker (e.g., the second speaker 512 of FIG. 5), a third speaker (e.g., the third speaker 513 of FIG. 5), and/or a fourth speaker (e.g., the fourth speaker 514 of FIG. 5).

Referring to FIG. 28, in operation 2701, the instructions, when executed individually or collectively by the at least one processor 120, may cause the foldable electronic device 200 to identify the state of the foldable electronic device 200.

The sensor 176 may be configured to obtain data indicating the state of the foldable electronic device 200. The data may include a first value obtained based on the unfolded state of the foldable electronic device 200 or a second value obtained based on the folded state of the foldable electronic device 200. The sensor 176 may be configured to provide the obtained data to the at least one processor 120. The at least one processor 120 may cause the foldable electronic device 200 to identify whether it is in the unfolded state or the folded state based on the data provided from the sensor 176.

In operation 2703, the instructions, when executed individually or collectively by the at least one processor 120, may be configured to identify whether the foldable electronic device 200 is in the unfolded state or in the folded state.

For example, in case of obtaining data indicating the first value from the sensor 176, the at least one processor 120 may be configured to identify the unfolded state of the foldable electronic device 200. In case of obtaining data indicating the second value from the sensor 176, the at least one processor 120 may be configured to identify the folded state of the foldable electronic device 200. In case that the at least one processor 120 identifies the unfolded state of the foldable electronic device 200, operation 2705 may be performed. In case that the at least one processor 120 identifies the folded state of the foldable electronic device 200, operation 2707 may be performed.

In the operation 2705, the instructions, when executed individually or collectively by the at least one processor 120, may cause the foldable electronic device 200 to control the DSP circuitry 2710 based on a first filter setting.

The DSP circuitry 2710 may be configured to adjust the frequency response characteristic of the first speaker 511 for a specific frequency band. For example, the DSP circuitry 2710 may have first filter setting information and second filter setting information for applying a sound effect set based on the state of foldable electronic device 200. For example, the first filter setting may be referred to as a setting method for controlling the EQ filter 2711 based on a frequency response characteristic set for audio signals provided through a relatively short path (e.g., the first path P1) in the unfolded state of the foldable electronic device 200. The at least one processor 120 may be configured to control the DSP circuitry 2710 based on the first filter setting in the unfolded state of the foldable electronic device 200.

In the operation 2707, the instructions, when executed individually or collectively by the at least one processor 120, may cause the foldable electronic device 200 to control the DSP circuitry 2710 based on a second filter setting.

For example, the second filter setting may be referred to as a setting method for controlling the EQ filter 2711 based on a frequency response characteristic set for audio signals provided through a relatively long path (e.g., the first path P1 and the second path P2) in the folded state of the foldable electronic device 200. The at least one processor 120 may be configured to control the DSP circuitry 2710 based on the second filter setting in the folded state of the foldable electronic device 200.

The quality of the audio signals provided from the first speaker 511 in the folded state of the foldable electronic device 200 may be substantially the same as a quality of the audio signals provided from the first speaker 511 in the unfolded state of the foldable electronic device 200. For example, the second filter setting may be set to compensate for a resonant frequency of audio signals lowering according to a relatively long path. By controlling the DSP circuitry 2710 according to the second filter setting, a high-pitched frequency response characteristic of the first speaker 511 reduced by the relatively long path in the folded state of the foldable electronic device 200 may be compensated. The foldable electronic device 200 may improve user experience by providing audio signals of substantially the same quality independently of the state of the foldable electronic device 200.

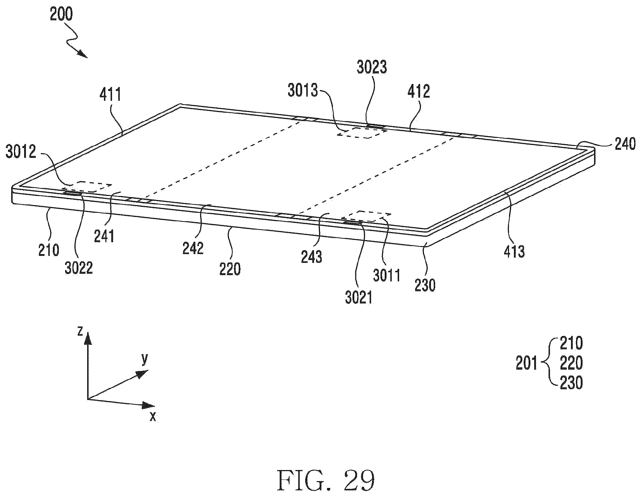

FIG. 29 illustrates a foldable electronic device.

As illustrated in FIG. 5, it is described that a foldable electronic device 200 includes a first speaker 511 and a third speaker 513 disposed in a third housing part 230, and a second speaker 512 and a fourth speaker 514 disposed in a first housing part 210, but embodiments are not limited thereto.

Referring to FIG. 28, the foldable electronic device 200 may include a first speaker 3011 disposed in the third housing part 230, a second speaker 3022 disposed in the first housing part 210, and a third speaker 3013 disposed in a second housing part 220. The first speaker 3011 may be disposed adjacent to a lower portion (e.g., a -y direction) of the third housing part 230. The second speaker 3022 may be disposed adjacent to a lower portion of the second housing part 220. The third speaker 3013 may be disposed adjacent to an upper portion (e.g., a +y direction) of the third housing part 230.

The descriptions described above may be substantially equally applied to the speakers of the foldable electronic device 200 illustrated in FIG. 28.

For example, in an unfolded state of the foldable electronic device 200, the first speaker 3011, the second speaker 3022, and the third speaker 3013 may be configured to provide audio signals toward a front side of the foldable electronic device 200. For example, audio signals outputted from the first speaker 3011 may be provided toward the front side of the foldable electronic device 200 through a first audio duct (e.g., the first audio duct 710 of FIG. 7) of the third housing part 230 and a through hole 3021 of a third front deco 413. Audio signals outputted from the second speaker 3022 may be provided toward the front side of the foldable electronic device 200 through a second audio duct (e.g., the second audio duct 810 of FIG. 8) of the first housing part 210 and a through hole 3022 of a first front deco 411. Audio signals outputted from the third speaker 3013 may be provided toward the front side of the foldable electronic device 200 through a third audio duct of the second housing part 220 and a through hole 3023 of a second front deco 412.

For example, in a folded state of the foldable electronic device 200, the first speaker 3011, the second speaker 3022, and the third speaker 3013 may be configured to provide audio signals toward a lateral side of the foldable electronic device 200. In the folded state of the foldable electronic device 200, audio signals outputted from the first speaker 3011 may be provided through the first audio duct 710, the through hole 3021, and a gap between the third front deco 413 and a rear side of the first housing part 210. In the folded state of the foldable electronic device 200, audio signals outputted from the second speaker 3022 may be provided through the second audio duct 810, the through hole 3022, and a gap between the first front deco 411 and the second front deco 412. In the folded state of the foldable electronic device 200, audio signals outputted from the third speaker 3013 may be provided through the third audio duct, the through hole 3023, and the gap between the second front deco 412 and the first front deco 411.

The technical problems to be achieved in the present disclosure are not limited to those mentioned above, and other technical problems not mentioned will be clearly understood by those having ordinary knowledge in the art to which the present disclosure belongs.

A foldable electronic device 101 or 200 is provided. The foldable electronic device 101 or 200 may comprise a foldable housing 201 including a first housing part 210, a second housing part 220, and a third housing part 230. The foldable electronic device 101 or 200 may comprise a first hinge assembly 250 rotatably connecting the first housing part 210 and the second housing part 220. The foldable electronic device 101 or 200 may comprise a second hinge assembly 260 rotatably connecting the second housing part 220 and the third housing part 230. The first hinge assembly 250 and the second hinge assembly 260 may be configured to provide a folded state of the foldable electronic device 101 or 200 having a front side of the third housing part 230 facing a rear side of the first housing part 210. The foldable electronic device 101 or 200 may comprise a flexible display 240 including a first portion 241 corresponding to the first housing part 210, a second portion 242 corresponding to the second housing part 220, and a third portion 243 corresponding to the third housing part 230. The third portion 243 may define a portion of the front side of the third housing part 230. The foldable electronic device 101 or 200 may comprise a front deco (e.g., the third front deco 413 of FIG. 4), including a through hole 521 or 523, partially covering a peripheral portion of the third portion of the flexible display 240, and defining another portion of the front side of the third housing part 230. The third housing part 230 may include a speaker (e.g., the first speaker 511 or the third speaker 513 of FIG. 5), and an audio duct 710, arranged with respect to the speaker 511 or 513, aligned with the through hole (e.g., the first through hole 521 or the third through hole 523 of FIG. 5) of the front deco 413. The rear side of the first housing part 210 may include a portion spaced apart from the front deco 413 to define a gap between the rear side of the first housing part 210 and the front deco 413, in the folded state of the foldable electronic device 101 or 200. The speaker 511 or 513 may be configured to, in an unfolded state of the foldable electronic device 101 or 200, provide audio signals, via a first path P1 formed by the audio duct 710 and the through hole 521 or 523 of the front deco 413, toward a front side of the foldable electronic device 101 or 200. The speaker 511 or 513 may be configured to, in the folded state of the foldable electronic device 101 or 200, provide the audio signals, via the first path P1 and a second path P2 formed by the gap between the front deco 413 and the rear side of the first housing part 210, toward a lateral side of the foldable electronic device 101 or 200.

The audio duct 710 may extend from an end connecting an inner space of the third housing part 230 in which the speaker 511 or 513 is disposed to another end aligned with the through hole 521 or 523 of the front deco 413.

The portion of the rear side of the first housing part 210 may include a sealant 911 spaced apart from the through hole 521 or 523 of the front deco 413 and contacted with (in contact with) a portion of the front deco 413, in the folded state of the foldable electronic device 101 or 200.

The sealant 911 may seal a gap between the portion of the front deco 413 and the rear side of the first housing part 210, such that the audio signals do not leak in directions different from a direction toward the lateral side of the foldable electronic device 101 or 200.

The front deco may include a first portion 1511 partially covering the peripheral portion of the third portion of the flexible display 240, and a second portion 1512 in contact with the third housing part 230. The first portion 1511 of the front deco 413 may be contacted with the portion of the rear side of the first housing part 210 in the folded state of the foldable electronic device 101 or 200. The second portion 1512 of the front deco 413 may be spaced apart from the rear side of the first housing part 210 in the folded state of the foldable electronic device 101 or 200.

The second portion 1512 of the front deco 413 may include an inclined portion 1610 inclined toward the lateral side of the foldable electronic device 101 or 200.

The inclined portion 1610 of the second portion of the front deco 413 may define the through hole 521 or 523.

The second portion 1512 of the front deco 413 may be omitted around the through hole 521 or 523.

The speaker 511 or 513 may may not include an enclosure.

The foldable electronic device 101 or 200 may further comprise at least one processor 120 including processing circuitry. The foldable electronic device 101 or 200 may comprise digital signal processing (DSP) circuitry 2710 electrically connected to the speaker 511 or 513. The foldable electronic device 101 or 200 may comprise memory 130 including one or more storage mediums storing instructions. The instructions, when executed by the at least one processor individually or collectively, may cause the foldable electronic device 101 or 200 to identify the folded state of the foldable electronic device 101 or 200 or the unfolded state of the foldable electronic device 101 or 200, and to control the DSP circuitry 2710 based on the identified state of the foldable electronic device 101 or 200.

The quality of the audio signals provided from the speaker 511 or 513 in the folded state of the foldable electronic device 101 or 200 may substantially correspond to a quality of the audio signals provided from the speaker 511 or 513 in the unfolded state of the foldable electronic device 101 or 200.

The front deco 413 may correspond to a third front deco 413. The foldable electronic device 101 or 200 may further comprise a first front deco 411, including a through hole 522 or 524, partially covering a peripheral portion of the first portion 241 of the flexible display 240. The foldable electronic device 101 or 200 may further comprise a second front deco 412 partially covering a peripheral portion of the second portion 242 of the flexible display 240. The first housing part 210 may include another speaker (e.g., the second speaker 512 or the fourth speaker 514 of FIG. 5) and another audio duct 810, arranged with respect to the other speaker 512 or 514, aligned with the through hole 522 or 524 of the first front deco 411. The other speaker 512 or 514 may be configured to, in the unfolded state of the foldable electronic device 101 or 200, provide audio signals, via a third path P3 formed by the other audio duct 810 and the through hole 522 or 524 of the first front deco 411, toward the front side of the foldable electronic device 101 or 200. The other speaker 512 or 514 may be configured to, in the folded state of the foldable electronic device 101 or 200, provide audio signals, via the third path P3 and a fourth path P4 formed by a gap between the first front deco 411 and the second front deco 412, toward the lateral side of the foldable electronic device 101 or 200.

The foldable electronic device 101 or 200 may further comprise another sealant 912 disposed between the first front deco 411 and the front side of the first housing part 210 to seal an area around the through hole 522 or 524 of the first front deco 411.

The first front deco 411 or the second front deco 412 may have an inclined portion 1710 or 1810 inclined toward the lateral side of the foldable electronic device 101 or 200.

The rear side of the first housing part 210 may include a dented portion 1111, formed in a region overlapping the through hole 521 or 523 of the front deco 413, dented toward the front side of the first housing part 210, in the folded state of the foldable electronic device 101 or 200.

A foldable electronic device 101 or 200 is provided. The foldable electronic device 101 or 200 may comprise a first housing part 210, a second housing part 220 rotatably coupled to the first housing part 210, and a third housing part 230 rotatably coupled to the second housing part 220. The foldable housing 201 may have a folded state of the foldable electronic device 101 or 200 having a front side of the third housing part 230 facing a rear side of the first housing part 201. The foldable electronic device 101 or 200 may comprise a flexible display 240 including a first portion 241 corresponding to the first housing part 210, a second portion 242 corresponding to the second housing part 220, and a third portion 243 corresponding to the third housing part 230. The third portion 243 may define a portion of the front side of the third housing part 230. The foldable electronic device 101 or 200 may comprise a front deco 410 partially covering a peripheral portion of the flexible display 240. The front deco 410 may include a first front deco 411, including a through hole 521 or 523, partially covering a peripheral portion of the first portion 241 of the flexible display 240, a second front deco 412 partially covering a peripheral portion of the second portion 242 of the flexible display 240, and a third front deco 413, including a through hole 522 or 524, partially covering a peripheral portion of the third portion 243 of the flexible display 240. The third housing part 230 may include a first speaker 511 or 513, and a first audio duct 710, arranged with respect to the first speaker 511 or 513, aligned with the through hole 521 or 523 of the third front deco 413. The first housing part 210 may include a second speaker 512 or 514, and a second audio duct 810, arranged with respect to the second speaker 512 or 514, aligned with the through hole 522 or 524 of the first front deco 411. The first speaker 511 or 513 may be configured to, in an unfolded state of the foldable electronic device 101 or 200, provide audio signals, via a first path P1 formed by the first audio duct 710 and the through hole 521 or 523 of the third front deco 413, toward a front side of the foldable electronic device 101 or 200. The first speaker 511 or 513 may be configured to, in a folded state of the foldable electronic 101 or 200, provide the audio signals, via the first path P1 and a second path P2 formed by a gap between the third front deco 413 and the rear side of the first housing part 210, toward a lateral side of the foldable electronic device 101 or 200.

The second speaker 512 or 514 may be configured to, in the unfolded state of the foldable electronic devices 101 and 200, provide audio signals, via a third path P3 formed by the second audio duct 810 and the through hole 522 or 524 of the first front deco 411, toward the front side of the foldable electronic device 101 or 200. The second speaker 512 or 514 may be configured to, in the folded state of the foldable electronic device 101 or 200, provide audio signals, via the third path P3 and a fourth path P4 formed by a gap between the first front deco 411 and the second front deco 412, toward the lateral side of the foldable electronic device 101 or 200.

The rear side of the first housing part 210 may include a sealant 911 spaced apart from the through hole 521 or 523 of the third front deco 413 and contacted with a portion of the third front deco 413, in the folded state of the foldable electronic device 101 or 200.

The third front deco 413 may include a first portion 1511 partially covering the peripheral portion of the third portion 243 of the flexible display 240, and a second portion 1512 contacted with the third housing part 230. The first portion 1511 of the third front deco 413 may be contacted with the portion of the rear side of the first housing part 210 in the folded state of the foldable electronic device 101 or 200. The second portion 1512 of the third front deco 413 may be spaced apart from the rear side of the first housing part 210 in the folded state of the foldable electronic device 101 or 200.

The second portion 1512 of the third front deco 413 may include a portion 1610 inclined toward the lateral side of the foldable electronic device 101 or 200 to expand an inlet of the first audio duct 710.

A foldable electronic device 101 or 200 is provided. The foldable electronic device 101 or 200 may comprise a foldable housing 201 including a first housing part 210, a second housing part 220, and a third housing part 230. The foldable electronic device 101 or 200 may comprise a first hinge assembly 250 rotatably connecting the first housing part 210 and the second housing part 220. The foldable electronic devices 101 and 200 may comprise a second hinge assembly 260 rotatably connecting the second housing part 220 and the third housing part 230. The foldable electronic device 101 or 200 may comprise a flexible display 240 including a first display portion 241 corresponding to the first housing part 210, a second display portion 242 corresponding to the second housing part 220, and a third display portion 243 corresponding to the third housing part 230. The foldable electronic device 101 or 200 may comprise a first speaker hole 522 disposed in a front deco 411 of the first display portion 241. The foldable electronic device 101 or 200 may comprise a second speaker hole 521 disposed in a front deco 413 of the third display portion 243. The foldable electronic device 101 or 200 may comprise a third speaker hole and a fourth speaker hole disposed in an upper lateral side of the foldable housing 201 in a fully folded state of the foldable electronic device 101 or 200. The foldable electronic device 101 or 200 may comprise a first speaker 512 disposed in the first housing part 210. The foldable electronic device 101 or 200 may comprise a third speaker 511 disposed in the third housing part. In the fully folded state of the foldable electronic device 101 or 200, audio ducts P3 and P4 of the first speaker hole and the third speaker hole are configured to connect to each other, and audio ducts P1 and P2 of the second speaker hole and the fourth speaker hole are configured to connect to each other..

The first hinge assembly 250 and the second hinge assembly 260 may be configured to provide the fully folded state of the foldable electronic device 101 or 200 having a front side of the third housing part 230 facing a rear side of the first housing part 210.

The third speaker hole may be formed by a gap between a front side of the first housing part 210 and a rear side of the second housing part 220 in the fully folded state of the foldable electronic device 101 or 200.

The fourth speaker hole may be formed by a gap between the front side of the third housing part 230 and the rear side of the first housing part 210 in the fully folded state of the foldable electronic device 101 or 200.

The foldable electronic device 101 or 200 may further include a sealant 911 disposed between the rear side of the first housing part 210 and the front deco 413 of the third display portion 243.

The sealant 911 may be spaced apart from the second speaker hole 521.

The foldable electronic device 101 or 200 may include a third speaker 514 disposed in the first housing part 210. The foldable electronic device 101 or 200 may include a fourth speaker 513 disposed in the third housing part 230. The foldable electronic device 101 or 200 may include a fifth speaker hole 524, disposed in the front deco 411 of the first display portion 241, and arranged with respect to the third speaker 514. The foldable electronic device 101 or 200 may include a sixth speaker hole 523 disposed in the front deco 413 of the third display portion 243, and arranged with respect to the fourth speaker 513.

The foldable electronic device 101 or 200 may further include a seventh speaker hole and an eighth speaker hole disposed in a lower lateral side of the foldable housing in the fully folded state of the foldable electronic device 101 or 200. In the fully folded state of the foldable electronic device 101 or 200, audio ducts of the fifth speaker hole and the seventh speaker hole are configured to connect each other, and audio ducts of the sixth speaker hole and the eighth speaker hole are configured to connect to each other.

The foldable electronic device 101 or 200 may further include another sealant 912 that seals an area around the first speaker hole of the front deco of the first display portion 241.

The effects that can be obtained from the present disclosure are not limited to those described above, and any other effects not mentioned herein will be clearly understood by those having ordinary knowledge in the art to which the present disclosure belongs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A foldable electronic device comprising:

   a foldable housing including a first housing part, a second housing part, and a third housing part;
   a first hinge assembly rotatably connecting the first housing part and the second housing part;
   a second hinge assembly rotatably connecting the second housing part and the third housing part, the first hinge assembly and the second hinge assembly configured to provide a folded state of the foldable electronic device having a front side of the third housing part facing a rear side of the first housing part;
   a flexible display including:

      a first portion corresponding to the first housing part,
      a second portion corresponding to the second housing part, and
      a third portion corresponding to the third housing part, the third portion defining a portion of the front side of the third housing part; and

   a front deco, including a through hole, partially covering a peripheral portion of the third portion of the flexible display, and defining another portion of the front side of the third housing part,
   wherein the third housing part includes:

      a speaker, and
      an audio duct, arranged with respect to the speaker, aligned with the through hole of the front deco,

   wherein the rear side of the first housing part includes a portion spaced apart from the front deco to define a gap between the rear side of the first housing part and the front deco, in the folded state of the foldable electronic device, and
   wherein the speaker is configured to:

      when the foldable electronic device is in an unfolded state, provide audio signals, via a first path formed by the audio duct and the through hole of the front deco, toward a front side of the foldable electronic device, and
      when the foldable electronic device is in the folded state, provide the audio signals, via the first path and a second path formed by the gap between the front deco and the rear side of the first housing part, toward a lateral side of the foldable electronic device.

2. The foldable electronic device of claim 1,
   wherein the audio duct extends from an end connecting an inner space of the third housing part in which the speaker is disposed to another end aligned with the through hole of the front deco.

3. The foldable electronic device of claim 1 or 2,
   wherein the portion of the rear side of the first housing part includes a sealant spaced apart from the through hole of the front deco and in contact with a portion of the front deco, in the folded state of the foldable electronic device.

4. The foldable electronic device of claim 3,
   wherein the sealant seals a gap between the portion of the front deco and the rear side of the first housing part, such that the audio signals do not leak in directions different from a direction toward the lateral side of the foldable electronic device.

5. The foldable electronic device of any one of claims 1 to 4,

   wherein the front deco includes:

      a first portion partially covering the peripheral portion of the third portion of the flexible display, and
      a second portion in contact with the third housing part,

wherein the first portion of the front deco is in contact with the portion of the rear side of the first housing part in the folded state of the foldable electronic device, and

wherein the second portion of the front deco is spaced apart from the rear side of the first housing part in the folded state of the foldable electronic device.

6. The foldable electronic device of claim 5,
wherein the second portion of the front deco includes an inclined portion inclined toward the lateral side of the foldable electronic device.

7. The foldable electronic device of claim 6,
wherein the inclined portion of the second portion of the front deco defines the through hole.

8. The foldable electronic device of claim 5,
wherein the second portion of the front deco is omitted around the through hole.

9. The foldable electronic device of any one of claims 1 to 8,
wherein the speaker does not include an enclosure.

10. The foldable electronic device of any one of claims 1 to 9, further comprising:

at least one processor including processing circuitry;
digital signal processing, DSP, circuitry electrically connected to the speaker; and
memory including one or more storage media storing instructions,
wherein the instructions, when executed by the at least one processor individually or collectively, cause the foldable electronic device to:

identify the folded state of the foldable electronic device or the unfolded state of the foldable electronic device, and
control the DSP circuitry based on the identified state of the foldable electronic device such that constant audio signals are provided from the speaker.

11. The foldable electronic device of claim 10,
wherein a quality of the audio signals provided from the speaker in the folded state of the foldable electronic device substantially corresponds to a quality of the audio signals provided from the speaker in the unfolded state of the foldable electronic device.

12. The foldable electronic device of any one of claims 1 to 11,

wherein the front deco corresponds to a third front deco,
wherein the foldable electronic device further comprises:

a first front deco, including a through hole, partially covering a peripheral portion of the first portion of the flexible display; and
a second front deco partially covering a peripheral portion of the second portion of the flexible display,
wherein the first housing part includes:

another speaker; and
another audio duct, arranged with respect to the other speaker, aligned with the through hole of the first front deco,

wherein the other speaker is configured to:

in the unfolded state of the foldable electronic device, provide audio signals, via a third path formed by the other audio duct and the through hole of the first front deco, toward the front side of the foldable electronic device, and
in the folded state of the foldable electronic device, provide audio signals, via the third path and a fourth path formed by a gap between the first front deco and the second front deco, toward the lateral side of the foldable electronic device.

13. The foldable electronic device of claim 12, further comprising another sealant disposed between the first front deco and the front side of the first housing part to seal an area around the through hole of the first front deco.

14. The foldable electronic device of claim 13, wherein the first front deco or the second front deco has an inclined portion inclined toward the lateral side of the foldable electronic device.

15. The foldable electronic device of any one of claims 1 to 14, wherein the rear side of the first housing part includes an indented portion, formed in a region overlapping the through hole of the front deco, indented toward the front side of the first housing part, in the folded state of the foldable electronic device.

100

ELECTRONIC DEVICE 101

INPUT
MODULE
150

SOUND
OUTPUT
MODULE
155

DISPLAY
MODULE
160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY
189

POWER
MANAGE-
MENT
MODULE
188

PROCESSOR 120

MAIN
PROCESSOR
121

AUXILIARY
PROCESSOR
123

COMMUNICATION MODULE 190

WIRELESS COMMUNICATION
MODULE 192

WIRED COMMUNICATION
MODULE 194

SUBSCRIBER
IDENTIFICATION
MODULE
196

ANTENNA
MODULE
197

AUDIO MODULE
170

HAPTIC MODULE
179

SENSOR MODULE
176

CAMERA MODULE
180

INTERFACE
177

CONNECTING
TERMINAL
178

SECOND
NETWORK
199

ELECTRONIC
DEVICE
104

FIRST NETWORK
198

ELECTRONIC
DEVICE
102

SERVER
108

FIG. 1

FIG. 2A

200b

200

250   220          260          243  275
                                           230
         0000000000                        239

201                                    240

275                                    275
                                       239
                                       239

                                       210

250

      250
              0000000000
      210    220   260         240c  239  275  230

                                        ┌ 210
                                    201 ┤ 220
                                        └ 230

            241

244
      242   245          243

FIG. 2B

FIG. 2C

FIG. 3A

FIG. 3B

EP 4 760 451 A1

FIG. 4

34

FIG. 5

200

C

C'

220
250
260
210
230

201 { 210
220
230

FIG. 6

FIG. 7

FIG. 8

FIG. 9

FIG. 10

200

1110

1111

210

911

y x

z

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

## INTERNATIONAL SEARCH REPORT

| International application No. |
| --- |
| **PCT/KR2025/008628** |

| A. CLASSIFICATION OF SUBJECT MATTER |
| --- |
| **G06F 1/16**(2006.01)i; **H04R 1/34**(2006.01)i; **H04R 3/12**(2006.01)i |
| According to International Patent Classification (IPC) or to both national classification and IPC |

| B. FIELDS SEARCHED |
| --- |
| Minimum documentation searched (classification system followed by classification symbols) |
| G06F 1/16(2006.01); G06F 3/041(2006.01); H04M 1/02(2006.01); H04M 1/03(2006.01); H04R 1/34(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (MOIP internal) & keywords: 폴더블(foldable), 힌지(hinge), 스피커(speaker), 경로(path), 케이스(case) |

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2024-0005557 A (SAMSUNG ELECTRONICS CO., LTD.) 12 January 2024 (2024-01-12)<br>paragraphs [0138]-[0142] and figures 7a-7c | 1-15 |
| A | KR 10-2021-0099971 A (SAMSUNG ELECTRONICS CO., LTD.) 13 August 2021 (2021-08-13)<br>paragraphs [0053], [0058] and figures 5a-10 | 1-15 |
| A | KR 10-2021-0099974 A (SAMSUNG ELECTRONICS CO., LTD.) 13 August 2021 (2021-08-13)<br>paragraphs [0050]-[0053] and figure 5 | 1-15 |
| A | WO 2022-045397 A1 (LG ELECTRONICS INC.) 03 March 2022 (2022-03-03)<br>paragraphs [0393]-[0400] and figures 8a-11 | 1-15 |
| A | CN 111770221 A (VIVO MOBILE COMMUNICATION CO., LTD.) 13 October 2020 (2020-10-13)<br>paragraphs [0032]-[0044] and figures 1-5 | 1-15 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 October 2025** | **15 October 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

**INTERNATIONAL SEARCH REPORT**
**Information on patent family members**

International application No.

**PCT/KR2025/008628**

| Patent document cited in search report | | | Publication date (day/month/year) | Patent family member(s) | | | Publication date (day/month/year) |
|---|---|---|---|---|---|---|---|
| KR | 10-2024-0005557 | A | 12 January 2024 | EP | 4530806 | A1 | 02 April 2025 |
| | | | | WO | 2024-010210 | A1 | 11 January 2024 |
| KR | 10-2021-0099971 | A | 13 August 2021 | EP | 4075234 | A1 | 19 October 2022 |
| | | | | EP | 4075234 | B1 | 09 July 2025 |
| | | | | KR | 10-2754659 | B1 | 14 January 2025 |
| | | | | WO | 2021-157892 | A1 | 12 August 2021 |
| KR | 10-2021-0099974 | A | 13 August 2021 | WO | 2021-157891 | A1 | 12 August 2021 |
| WO | 2022-045397 | A1 | 03 March 2022 | KR | 10-2023-0057303 | A | 28 April 2023 |
| | | | | KR | 10-2845421 | B1 | 11 August 2025 |
| | | | | US | 12267451 | B2 | 01 April 2025 |
| | | | | US | 2023-0291819 | A1 | 14 September 2023 |
| CN | 111770221 | A | 13 October 2020 | CN | 111770221 | B | 16 July 2021 |
| | | | | CN | 111992877 | A | 27 November 2020 |
| | | | | CN | 113909008 | A | 11 January 2022 |
| | | | | CN | 113922115 | A | 11 January 2022 |
| | | | | CN | 113922115 | B | 08 March 2024 |
| | | | | EP | 4167549 | A1 | 19 April 2023 |
| | | | | EP | 4167549 | B1 | 06 August 2025 |
| | | | | JP | 2023-526896 | A | 26 June 2023 |
| | | | | JP | 2023-534418 | A | 09 August 2023 |
| | | | | JP | 7455999 | B2 | 26 March 2024 |
| | | | | JP | 7518962 | B2 | 18 July 2024 |
| | | | | KR | 10-2807598 | B1 | 15 May 2025 |
| | | | | US | 11565349 | B2 | 31 January 2023 |
| | | | | US | 2022-0009033 | A1 | 13 January 2022 |
| | | | | US | 2023-0133323 | A1 | 04 May 2023 |
| | | | | US | 2023-0152848 | A1 | 18 May 2023 |
| | | | | WO | 2022-007703 | A1 | 13 January 2022 |
| | | | | WO | 2022-007775 | A1 | 13 January 2022 |
| | | | | WO | 2022-007850 | A1 | 13 January 2022 |

Form PCT/ISA/210 (patent family annex) (July 2022)